(19) Europäisches Patentamt
European Patent Office
Office européen des brevets

(11) **EP 3 930 904 B1**

(12) **EUROPEAN PATENT SPECIFICATION**

(45) Date of publication and mention
of the grant of the patent:
**27.09.2023 Bulletin 2023/39**

(21) Application number: **20903889.2**

(22) Date of filing: **08.12.2020**

(51) International Patent Classification (IPC):
*G01N 21/64* (2006.01)      *G01N 21/76* (2006.01)

(52) Cooperative Patent Classification (CPC):
**G01N 21/6454;** G01N 21/76

(86) International application number:
**PCT/US2020/070877**

(87) International publication number:
**WO 2021/127685 (24.06.2021 Gazette 2021/25)**

(54) **ON-CHIP LOCALIZATION MICROSCOPY**

ON-CHIP-LOKALISIERUNGSMIKROSKOPIE

MICROSCOPIE DE LOCALISATION SUR PUCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2019 US 201962950065 P**

(43) Date of publication of application:
**05.01.2022 Bulletin 2022/01**

(73) Proprietors:
• **Illumina, Inc.**
**San Diego, CA 92122 (US)**
• **Illumina Cambridge Limited**
**Cambridge CB21 6DF (GB)**

(72) Inventors:
• **EVANS, Geraint**
**Cambridge CB21 6DF (GB)**
• **HONG, Stanley**
**San Diego, California 92122 (US)**

(74) Representative: **Murgitroyd & Company**
**Murgitroyd House**
**165-169 Scotland Street**
**Glasgow G5 8PL (GB)**

(56) References cited:
**US-A1- 2009 081 129      US-A1- 2010 009 456**
**US-A1- 2012 026 509      US-A1- 2018 239 087**
**US-A1- 2018 239 087      US-A1- 2018 251 829**
**US-A1- 2019 088 463      US-A1- 2019 374 923**

• **Reymond Loïc, Ziegler Johannes, Knapp Christian, Wang Fung-Chen, Huser Thomas, Ruprecht Verena, Wieser Stefan: "SIMPLE: Structured illumination based point localization estimator with enhanced precision", Optics Express, vol. 27, no. 17, 19 August 2019 (2019-08-19), page 24578, XP055822112, DOI: 10.1364/OE.27.024578**

EP 3 930 904 B1

## Description

### CROSS-REFERENCE TO RELATED APPLICATION

This application claims priority to U.S Provisional Patent Application No. 62/950,065, filed on December 18, 2019, and entitled "ON-CHIP LOCALIZATION MICROSCOPY".

### BACKGROUND

Samples of different materials can be analyzed using one or more of a variety of analytical processes. For example, sequencing such as high-throughput DNA sequencing can be the basis for genomic analysis and other genetic research. For example, sequencing by synthesis (SBS) technology uses modified deoxyribonucleotide triphosphates (dNTPs) including a terminator and a fluorescent dye having an emission spectrum. In this and other types of sequencing, characteristics of a sample of genetic material are determined by illuminating the sample, and by detecting emission light (e.g., fluorescent light) that is generated in response to the illumination. The efficiency of sample analysis processes is often evaluated in terms of the throughput provided by the process, such as the output of analysis results by the process per time unit. In existing approaches, the output may be limited by a relatively low maximum density of sample material that the analysis system can handle. US2010/009456, US 2018/251829, US 2019/088463 and US 2018/239087 disclose optical biosensors

### SUMMARY

In a first aspect, an analysis substrate comprises: a localization layer to be provided with a sample comprising a nucleotide provided with a fluorescent dye; and a sensor layer comprising an array of sensor pixels, the localization layer being on-chip relative to the sensor layer, one or more of the array of sensor pixels to receive a propagation of fluorescence from the fluorescent dye.

Implementations can include any or all of the following features. The analysis substrate is part of a flowcell. The localization layer comprises nanowells. The localization layer comprises a zero-mode waveguide. The localization layer comprises a surface passivation layer. The sensor layer comprises a complementary metal-oxide-semiconductor chip. The array of sensor pixels comprises an array of photodiodes. The sensor layer comprises a charge-coupled device. The analysis substrate further comprises a spacer layer between the localization layer and the sensor layer, the spacer layer having a thickness based on the propagation of fluorescence from the fluorescent dye. The spacer layer comprises a planar waveguide. The thickness of the spacer layer corresponds to the propagation of fluorescence from the fluorescent dye being received by a predefined proportion of the array of sensor pixels. The thickness of the spacer layer is selected based on a predefined full width at half maximum of the propagation of fluorescence from the fluorescent dye. The sensor layer provides a single field of view of the localization layer. The analysis substrate further comprises a filter layer between the localization layer and the sensor layer, the filter layer including at least one color filter. The analysis substrate does not have a filter between the localization layer and the sensor layer, and wherein the analysis substrate does not have a waveguide between the localization layer and the sensor layer.

In a second aspect, an imaging system comprises: an analysis substrate comprising: a localization layer to be provided with a sample comprising a nucleotide provided with a fluorescent dye; and a sensor layer, the localization layer being on-chip relative to the sensor layer; and imaging circuitry to image the sample, the imaging circuitry comprising: an array of sensor pixels at the sensor layer, one or more of the array of sensor pixels to receive a propagation of fluorescence from the fluorescent dye; and fitting circuitry to identify, using a signal of the sensor layer, a pixel intensity distribution due to a point spread function, and determine a centroid of the pixel intensity distribution by fitting a function to the pixel intensity distribution.

Implementations can include any or all of the following features. The analysis substrate is part of a flowcell. The localization layer comprises nanowells. The localization layer comprises a zero-mode waveguide. The localization layer comprises a surface passivation layer. The sensor layer comprises a complementary metal-oxide-semiconductor chip. The array of sensor pixels comprises an array of photodiodes. The sensor layer comprises a charge-coupled device. The analysis substrate further comprises a spacer layer between the localization layer and the sensor layer, the spacer layer having a thickness based on the propagation of fluorescence from the fluorescent dye. The spacer layer comprises a planar waveguide. The thickness of the spacer layer corresponds to the propagation of fluorescence from the fluorescent dye being received by a predefined proportion of the array of sensor pixels. The thickness of the spacer layer is selected based on a predefined full width at half maximum of the propagation of fluorescence from the fluorescent dye. The imaging circuitry further comprises restriction circuitry restricting the fitting circuitry to fit the function to the pixel intensity distribution only in at least one area indicated by a well distribution pattern. The imaging circuitry further comprises rejection circuitry to reject at least one localization outside the area indicated by the well distribution pattern. The sensor layer provides a single field of view of the localization layer. The imaging system further comprises a filter layer between the localization layer and the sensor layer, the filter layer including at least one color filter. The analysis substrate does not have a filter between the localization layer and the sensor layer, and wherein the analysis substrate does not have a waveguide between the localization layer and the sensor layer. The imaging system further comprises: an illumination light source; illumination light timing circuitry to generate discrete light pulses using the illumination light source; and image sensor timing circuitry to time-gate the array of sensor pixels based on the discrete light pulses of the illumination light.

In a third aspect, a method comprises: performing on-chip imaging of a sample at an analysis substrate; and applying single-molecule localization microscopy (SMLM) to at least one image of the on-chip imaging.

Implementations can include any or all of the following features. Performing the on-chip imaging comprises: applying the sample to a localization layer of the analysis substrate, the sample comprising a nucleotide provided with a fluorescent dye; receiving a propagation of fluorescence from the fluorescent dye using at least one sensor pixel at a sensor layer of the analysis substrate, the sensor layer comprising an array of sensor pixels; and performing the SMLM comprises: analyzing the sample based on the propagation of fluorescence from the fluorescent dye. Analyzing the sample comprises identifying, using a signal of the sensor layer, a pixel intensity distribution due to a point spread function, and determining a centroid of the pixel intensity distribution by fitting a function to the pixel intensity distribution. The method further comprises restricting the fitting to at least one area indicated by a well distribution pattern for the localization layer. The method further comprises rejecting at least one localization outside the area indicated by the well distribution pattern. The method further comprises introducing a photoswitching buffer at the localization layer before receiving the propagation of fluorescence, wherein the propagation of fluorescence is generated by a photoswitching dye. An element of the sample comprises a sticky element, and wherein the propagation of fluorescence is generated by a fluorescent dye that becomes at least temporarily attached to the sample by way of the sticky element. Receiving the propagation of fluorescence from the fluorescent dye using the at least one sensor pixel comprises imaging a fluorescent dye based on the fluorescent dye becoming incorporated into the sample. A fluorescent dye is attached to a nucleotide by a phosphate tail, and wherein the phosphate tail is cleaved during incorporation of the nucleotide into the sample. A blocker on the nucleotide prevents further incorporation. Performing the SMLM comprises performing sequencing by synthesis. The sample comprises single molecules. The sample comprises a cluster of molecules. The on-chip imaging comprises a single field of view of the localization layer. The on-chip imaging and the SMLM are performed as part of sequencing of the sample. The method further comprises performing color filtering of the propagation of fluorescence. The method further comprises shaping the propagation of fluorescence to have a predefined full width at half maximum at the sensor layer. Shaping the propagation of fluorescence includes providing a spacer layer between the localization layer and the sensor layer. The method further comprises triggering the propagation of fluorescence by chemiluminescence. Triggering the propagation of fluorescence comprises catalyzing a light-emitting compound. The light-emitting compound comprises D-luciferin or a luciferin derivative, wherein a catalyst comprises luciferase, the method further comprising introducing one or more cofactors. The method further comprises operating an illumination light source to trigger the propagation of fluorescence. Operating the illumination light source comprises generating discrete light pulses using the illumination light source. The method further comprises time-gating the sensor layer based on the discrete light pulses of the illumination light source.

In a fourth aspect, a method comprises: setting at least one of an activation rate or a deactivation rate of fluorescent tags for a sample to be sequenced; stochastically switching between active fluorophore sets and inactive fluorophore sets of the fluorescent tags; imaging the sample using on-chip imaging; performing localization of at least one centroid of a point spread function in at least one image; and determining whether to adjust the activation rate or the deactivation rate.

Implementations can include any or all of the following features. The determination is based on whether a number of localizations has decreased. The method further comprises adjusting at least the activation rate based on the determination. Adjusting the activation rate comprises changing an illumination wavelength. Adjusting the activation rate comprises increasing a concentration of a chemical substance at the sample. The method further comprises triggering a propagation of fluorescence from the active fluorophore sets by chemiluminescence. The method further comprises catalyzing a light-emitting compound to trigger the propagation of fluorescence from the active fluorophore sets. The light-emitting compound comprises D-luciferin or a luciferin derivative, wherein a catalyst comprises luciferase, the method further comprising introducing one or more cofactors. The method further comprises operating an illumination light source to trigger a propagation of fluorescence. Operating the illumination light source comprises generating discrete light pulses using the illumination light source. The method further comprises time-gating a sensor layer based on the discrete light pulses of the illumination light source.

In a fifth aspect, a method comprises: conjugating a light-emitting compound with a nucleotide of a sample material at an analysis substrate; introducing one or more cofactors at the analysis substrate; introducing a catalyst at the analysis substrate; performing on-chip imaging of the sample material at the analysis substrate; and applying single-molecule localization microscopy (SMLM) to at least one image of the on-chip imaging.

Implementations can include any or all of the following features. The light-emitting compound comprises D-luciferin or a luciferin derivative, and the catalyst comprises luciferase. The cofactor includes at least one of oxygen or adenosine triphosphate. Performing the on-chip imaging comprises: applying the sample material to a localization layer of the analysis substrate, the sample comprising a nucleotide provided with a fluorescent dye; receiving a propagation of fluorescence from the light-emitting compound using at least one sensor pixel at a sensor layer of the analysis substrate, the sensor layer comprising an array of sensor pixels; and performing the SMLM comprises: analyzing the sample material based on the propagation of fluorescence from the fluorescent dye. Analyzing the sample comprises identifying, using a signal of the sensor layer, a pixel intensity distribution due to a point spread function, and determining a centroid of the pixel intensity distribution by fitting a function to the pixel intensity distribution.

It should be appreciated that all combinations of the foregoing concepts and additional concepts discussed in greater detail below (provided such concepts are not mutually inconsistent) are contemplated as being part of the inventive subject matter disclosed herein and are used to achieve the benefits and advantages provided herein. In particular, all combinations of claimed subject matter appearing at the end of this disclosure are contemplated as being part of the inventive subject matter disclosed herein.

## BRIEF DESCRIPTION OF DRAWINGS

FIG. 1 shows an example of an analysis substrate.
FIGS. 2A-2B show example cross sections of an analysis substrate.
FIG. 3 shows a graph with an example of a pixel intensity distribution for the analysis substrate in FIGS. 2A-2B.
FIG. 4 shows an example of a propagation of fluorescence in the analysis substrate of FIGS. 2A-2B.
FIG. 5 shows an example of pixel intensity distributions at an array of pixel sensors.
FIG. 6 shows an example of imaging circuitry that can be used for analyzing a sample.
FIGS. 7A-7B show examples of analysis substrates each having a spacer layer.
FIGS. 8A-8B show example cross sections of analysis substrates each having a surface passivation layer.
FIGS. 9A-9B show an example of SBS-based sequencing chemistry involving photoswitching.
FIGS. 10A-10B show an example of SBS-based sequencing chemistry.
FIGS. 11A-11B show an example of sequencing chemistry involving real-time observation of incorporation.
FIGS. 12A-12C show another example of sequencing chemistry involving real-time observation of incorporation.
FIGS. 13A-13C show another example of sequencing chemistry.

FIG. 14 shows an example of a method.
FIG. 15 shows an example of a method.
FIG. 16 shows an example of a method.
FIG. 17 shows an example of a method.
FIG. 18 shows an example of catalyzing a light-emitting compound.
FIG. 19 shows an example of a system.
FIG. 20 shows an example of pulse graphs.
FIG. 21 is a schematic view of an example system that can be used for biological and/or chemical analysis.
FIG. 22 shows an example of a computer device that can be used to implement the techniques described here.

## DETAILED DESCRIPTION

The present disclosure describes systems, techniques, articles of manufacture, and/or compositions of matter that facilitate improved analysis of samples. In some implementations, localization-based super-resolution imaging can be provided for analysis of a sample material. In some implementations, the density of a sample material (e.g., a molecule density, or a cluster density regarding nucleic acid materials) can be improved. In some implementations, localization microscopy is applied to on-chip imaging. For example, this can allow multiple clusters to be imaged (e.g., in a sequencing process) per sensor pixel. In some implementations, a spacer is provided between the image sensor and the sample. For example, the spacer can be tuned to a thickness so that fluorescent propagation occurs over a desirable number of pixels. In some implementations, no spacer or filter is provided between the image sensor and the sample. For example, fluorescent propagation can be triggered by way of chemiluminescence. As another example, illumination light can be pulsed and the sensor pixels can be time-gated based on the illumination light pulses.

Sample analysis can include, but is not limited to, genetic sequencing (e.g., determining the structure of genetic material), genotyping (e.g., determining differences in an individual's genetic make-up), gene expression (e.g., synthesizing a gene product using gene information), proteomics (e.g., large-scale study of proteins), or combinations thereof.

Some examples described herein relate to sequencing of genetic material. Sequencing can be performed on a sample to determine which building blocks, called nucleotides, make up the particular genetic material that is in the sample. The sequencing can be done after the genetic material has first been purified and then replicated a number of times so as to create multiple copies of the element (e.g., a deoxyribonucleic acid (DNA) element) to be sequenced, in order to increase the readout signal. Imaging can be performed as part of the process of sequencing the genetic material. This can involve fluorescent imaging, where a sample of genetic material is subjected to light (e.g., a laser beam) to trigger a fluorescent response by one or more markers on the genetic material. Some nucleotides of the genetic material can have fluorescent tags applied to them, which allows for determination of the presence of the nucleotide by shining light onto, and looking for a characteristic response from, the sample. Fluorescent responses can be detected over the course of the sequencing process and used to build a record of nucleotides in the sample.

Examples herein refer to SBS. SBS techniques can involve enzymatic extension of a nascent nucleic acid strand through the iterative addition of nucleotides against a template strand. In some implementations, a single nucleotide monomer may be provided to a target nucleotide in the presence of a polymerase in each delivery. In some implementations, more than one type of nucleotide monomer can be provided to a target nucleic acid in the presence of a polymerase in a delivery. SBS can utilize nucleotide monomers that have a terminator moiety or those that lack any terminator moieties. SBS techniques can utilize nucleotide monomers that have a label moiety or those that lack a label moiety.

Examples described herein refer to flowcells. A flowcell can be considered a substrate that can be used in preparing and accommodating or carrying one or more samples in at least one stage of an analysis process. The flowcell is made of a material that is compatible with both the sample material (e.g., genetic material), the illumination and the chemical reactions to which it will be exposed. The substrate can have one or more channels in which sample material can be deposited. A substance (e.g., a liquid) can be flowed through the channel where the sample genetic material is present to trigger one or more chemical reactions and/or to remove unwanted material. The flowcell may enable the imaging by facilitating that the sample in the flowcell channel can be subjected to illuminating light and that any fluorescent responses from the sample can be detected. Some implementations of the system may be designed to be used with at least one flowcell, but may not include the flowcell(s) during one or more stages, such as during shipping or when delivered to a customer. For example, the flowcell(s) can be installed into an implementation at the customer's premises in order to perform analysis. The flowcell can have one or more surfaces configured for accommodating samples, such as, but not limited to, samples of nucleic acid material. In some implementations, the surface(s) are coated with one or more polymers. For example, the polymer can comprise poly(N-(5-azidoacetamidylpentyl) acrylamide-co-acrylamide), sometimes referred to as PAZAM.

Examples herein relate to fully functional nucleotides (ffNs). The ffNs may be those commercially available, including but not limited to those provided by Illumina, Inc., and are exemples of reversibly blocked nucleotides (rbNTPs). In some implementations, three of the four rbNTPs comprise fluorescent labels attached via linkers. The linkers may comprise one or more cleavage groups, or no cleavage groups. For example, a linker attaching one or more rbNTPs to a fluorophore may comprise an azide and/or an alkoxy group, for example on the same carbon, such that the linkers may be cleaved after each incorporation cycle by means of a phosphine reagent as previously referenced, thereby releasing the fluorescent moiety for further sequence elongation. The ffN can be coupled to a reversible terminator to inhibit the polymerase from adding another nucleotide. In some implementations, a reversible terminator is cleavable by exposure to light or heat. In some implementations, a reversible terminator is cleavable by absorption of heat from the light. In some implementations, a reversible terminator is cleavable by a photochemical reaction induced by the light. In some implementations, a reversible terminator is cleavable by reaction with a chemical agent. In some implementations, a reversible terminator includes azidomethyl ($CH_2N_3$), and/or the chemical agent includes tris(hydroxypropyl)phosphine (THP).

Examples herein refer to a cluster of molecules. A cluster can be an example of an amplification of a strand of nucleic acid material. The term cluster can refer to a population of nucleic acids that is attached to a solid-phase to form a feature or site. The nucleic acids are generally of a single species, thereby forming a homogenous cluster. However, in some implementations the nucleic acids can be heterogeneous, such that individual molecules having different sequences are present at the site or feature. The nucleic acids can be covalently attached, for example, via their 3' or 5' ends, but in some cases other attachment means are possible. The nucleic acids in a cluster can be single stranded or double stranded. In some implementations, clusters are made by a solid-phase amplification method known as bridge amplification. For example, a cluster can include multiple immobilized copies of a polynucleotide sequence. The boundary of an individual cluster can be confined to a relatively local area in which the initial polynucleotide molecule was immobilized before cluster formation.

Examples herein refer to a sample that includes one or more single molecules. A single-molecule sample is an example of an unamplified strand of nucleic acid material. The nucleic acid in a single-molecule sample can be single stranded or double stranded.

Examples herein refer to nanoimprinting. In nanoimprinting lithography, a pre-fabricated nanoscale template may mechanically displace a fluidic resin to mold the desired nanostructures. The resin may then be cured with the nanoscale template in place. Following the removal of the nanoscale template, a molded solid resin attached to a desired substrate may be produced. In some implementations, a nanoimprinting process may begin with fully or partially covering a substrate or wafer with imprinting resin (e.g., a resin as exemplified below). One or more nanostructures may be formed in the imprinting resin in a molding process using a nanoscale template. The imprinting resin can be cured against the substrate or wafer, and a resin-removal process can be applied to remove residue from the wafer or substrate.

For example, the resin removal can form chamber lanes adjacent to the nanostructures. The substrate or wafer so formed can have another substrate or a gasket applied thereto so as to form a flowcell having the described nanostructures as well as flowcell chambers formed by enclosing the chamber lanes. In some implementations, the process of applying the imprinting resin may be configured to produce little or no resin residue, and in such implementations a resin-removal process can be omitted. In some applications, the cured resin may also be functionalized with a chemical treatment or an attachment of biomolecules, depending on the end use. In nanoimprinting lithography, an imprinted photoresist can be a sacrificial material and similarly be used as an intermediate tool to transfer the patterned resist into the substrate or a variation of the resist can be used such that the imprinted resist serves as the input to a subsequent coating step. An example of a resist that would remain following patterning is material formed by a process that involves conversion of monomers into a colloidal solution as a precursor to a gel of particles and/or polymers, sometimes referred to as a sol-gel based material.

Examples herein refer to waveguides. The term waveguide can mean a structure or material (e.g., a substrate) that confines the propagation of electromagnetic radiation to one or more particular locations, or that facilitates propagation of electromagnetic radiation in one or more directions. For example, a waveguide can guide light to a first location, or in a first direction, while preventing or substantially preventing the light from propagating to a second location, or in a second direction. A planar waveguide is a waveguide with a planar geometry that guides waves (e.g., light predominantly in one plane or in one dimension. In some implementations, a planar geometry can involve the planar waveguide having a substantial size in two dimensions (e.g., a respective x-dimension and y-dimension of the planar waveguide). In a third dimension, on the other hand (e.g., a z-dimension of the planar waveguide), the planar waveguide can have a substantially smaller size than in the first two dimensions. For example, a planar waveguide can be implemented in form of a layer or a film of a material that conveys electromagnetic radiation.

A zero-mode waveguide is another example of a waveguide. A zero-mode waveguide can be configured to guide electromagnetic radiation into a volume having dimensions that are small relative to the light wavelength. A dimension can be considered small when the zero-mode waveguide at least substantially prevents light that enters the zero-mode waveguide from propagating through the core of the zero-mode waveguide. For example, the zero-mode waveguide can attenuate more than about 70%, more than about 80%, more than about 90% or more than about 99% of the incident radiation. In some implementations, a small dimension can be less than the wavelength of the light, including, but not limited to, having a length of about half the wavelength, or about one twentieth of the wavelength, or about one two-hundredth of the wavelength, or less.

Examples herein refer to substrates. A substrate may refer to any material that provides an at least substantially rigid structure, or to a structure that retains its shape rather than taking on the shape of a vessel to which it is placed in contact. The material can have a surface to which another material can be attached including, for example, smooth supports (e.g., metal, glass, plastic, silicon, and ceramic surfaces), as well as textured and/or porous materials. Possible substrates include, but are not limited to, glass and modified or functionalized glass, plastics (including acrylics, polystyrene and copolymers of styrene and other materials, polypropylene, polyethylene, polybutylene, polyurethanes, Teflon™, etc.), polysaccharides, nylon or nitrocellulose, resins, silica or silica-based materials including silicon and modified silicon, carbon, metals, inorganic glasses, plastics, optical fiber bundles, and a variety of other polymers. In general, the substrates allow optical detection and do not themselves appreciably fluoresce.

Examples herein refer to single-molecule localization microscopy (SMLM). As used herein, the term "localization" refers to SMLM. SMLM is an imaging technique in which a set of points on a microscopic structure (e.g., nucleic material) are associated with single-molecule fluorescent labels. Due to the influence of one or more forms of control, the points can be switched between respective single-molecule fluorescent (e.g., "on") and nonfluorescent (e.g., "off") states. In some implementations, the control can be set so that over the course of high frame-rate imaging, different sets of molecules are active and therefore visible at different time points. Moreover, at any given time the active population can be sufficiently low such that individual, or nearly individual, point-spread functions of the fluorescent labels can be observed. This can allow the microscopic structure points to be specified with high accuracy by fitting and extracting the centroid of the point-spread function. For example, the accuracy can be less than about 150nm, such as less than about 120nm (e.g., less than about 100nm). In SMLM, an image or other representation of the microscopic structure can then be built up by way of the high frame-rate imaging, in which cycles of on/off switching of respective fluorescent labels allow localization of different sets of molecules at different time points (i.e., in separate frames). Through successive cycles of localization, a point-like image can be built up. SMLM allows a higher sample density (e.g., cluster density) than previous approaches in on-chip imaging. Some previous approaches have succeeded in imaging one cluster per pixel in the image sensor. In some implementations, SMLM applied to on-chip imaging can allow imaging of more than about one cluster per pixel. For example, more than about 10 clusters per pixel can be imaged, such as more than about 50 clusters per pixel (e.g., more than about 100 clusters per pixel). Stochastic optical reconstruction microscopy (STORM) is an example of SMLM. STORM is a type of super-resolution optical microscopy technique that is based on stochastic switching of single-molecule fluorescence signals. STORM involves sequential activation and timeresolved localization of photoswitchable fluorophores to create high resolution images. Particularly, STORM utilizes fluorescent probes that can switch between fluorescent and dark states and a microscopy system can excite an optically resolvable fraction of the fluorophores.

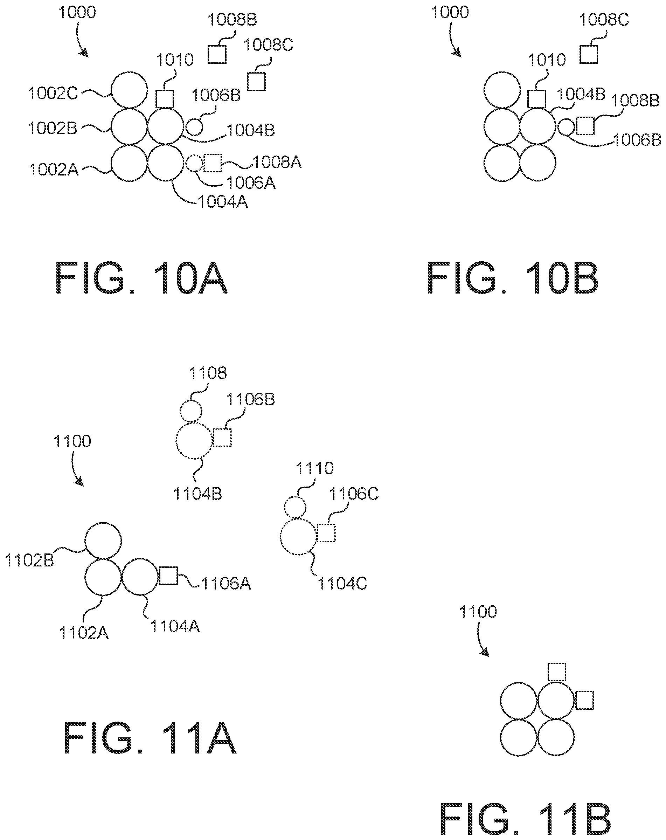

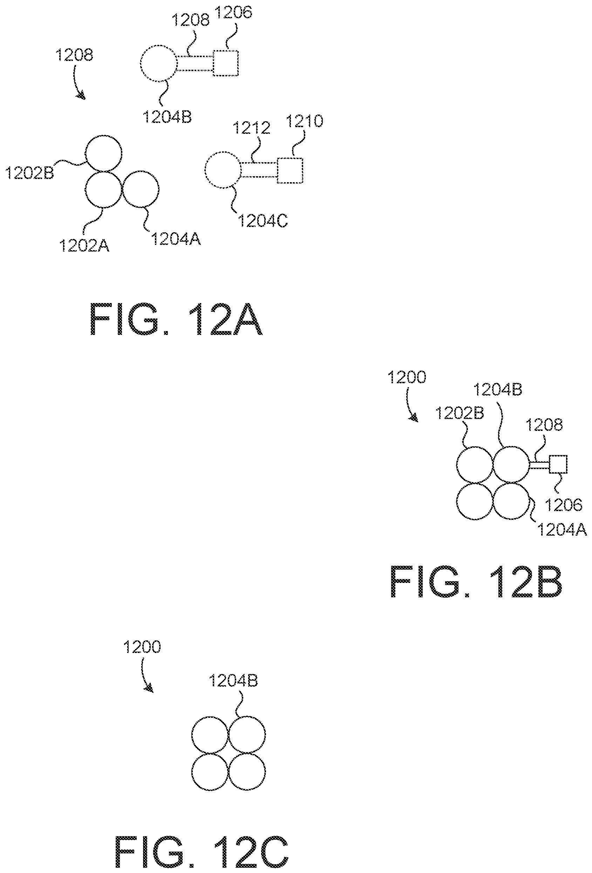

The following examples further illustrate SMLM. The terms "single-molecule" in SMLM reflects that the fluorescent label is applied to individual single molecules in the microscopic structure. Some techniques for nucleic-material analysis (e.g., the approach described below with reference to FIGS. 12A-12C), are associated with polynucleotide sequences that are not amplified, that is, with single molecules as opposed to clusters. Other techniques for nucleic-material analysis (e.g., the approaches described below with reference to FIGS. 10A-10B, FIGS. 11A-11B, and/or FIGS. 13A-13C) are associated with polynucleotide sequences that are amplified, that is, with clusters. As such, SMLM can be used with single molecules, with clusters of molecules, or with both. That is, SMLM involves imaging a single feature, whether that single feature be a single molecule (e.g., an individual non-amplified molecule) or a cluster (e.g., a population of several molecules of the same species), by way of fitting and extracting the centroid of the point-spread function of the activated fluorescent label. The substrate will be labeled with single-molecules at a relatively high density. As discussed above, the density can be more than about one cluster per pixel (up to more than about 100 clusters per pixel). The single-molecules are switched on/off with sufficient control to set the approximate number (e.g., proportion) of active molecules in an individual frame. Any of multiple different photoswitching techniques can be used, including, but not limited to, chemical photoswitching and/or photoswitching via nucleotide incorporation. The positions of individual molecules are localized by way of point spread function fitting. The SMLM can build an image from multiple localizations, such as localizations done in various frames captured of the substrate.

Examples herein refer to on-chip imaging. On-chip imaging may involve configurations where an imaging substrate is to be situated on-chip relative to the image sensor(s). For example, this can reduce, and in some instances even eliminate, the use of emission optics between the sample and the image sensor, such emission optics including, but not limited to, objective(s), lens(s), and filter(s). On-chip imaging can involve a relatively close proximity between the sample substrate and the image sensor(s). For example, the sensor can be less than about $50\mu$m from the substrate, such as less than about $30\mu$m from the substrate (e.g., less than about $20\mu$m from the substrate). On-chip imaging can be used with any of multiple types of sensor technology. In some implementations, metal-oxide-semiconductor (MOS) devices are used with on-chip imaging. For example, a complementary MOS (CMOS) device (e.g., a CMOS chip) can be used. In some implementations, a charge-coupled device (CCD) is used with on-chip imaging.

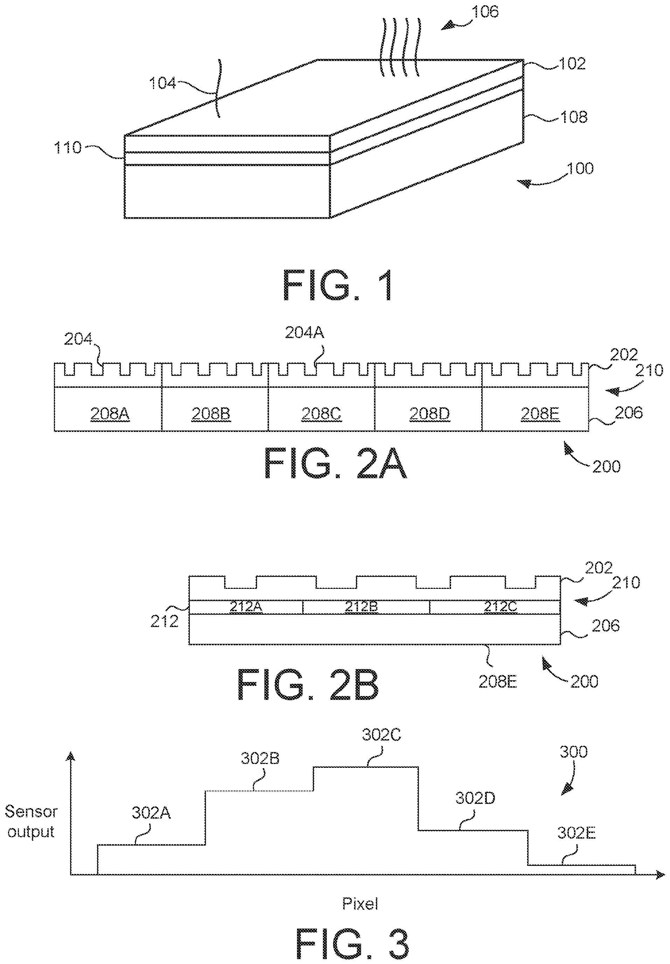

FIG. 1 shows an example of an analysis substrate 100. The analysis substrate 100 can be used with, or as part of, one or more other examples described elsewhere herein. In some implementations, the analysis substrate 100 can be used for analysis of one or more samples of nucleic acid material. For example, the analysis substrate 100 can be, or be part of, a flowcell to be used in sequencing.

The analysis substrate 100 includes a localization layer 102. The term localization is here used to illustrate that one or more aspects of a sample will be localized (e.g., have its exact or approximate location determined) relative to the localization layer 102. The localization layer 102 can be positioned at one or more locations of the analysis substrate 100. The present position, being at the "top" of the analysis substrate 100, is shown for illustrative purposes only. The localization layer 102 can include one or more substrates which together with a sensor layer 108 and a spacer layer 110 described below are included in the analysis substrate 100. That is, the one or more substrates of the localization layer 102 are part of the analysis substrate 100. For example, the localization layer 102 can include a substrate configured for receiving and accommodating one or more samples of nucleic acid material. One or more molecules can be provided at the localization layer 102 as a sample. Here, a single molecule 104 and a cluster 106 of molecules are schematically illustrated at the localization layer 102. For example, the single molecule 104 is an unamplified sample. As such, the sample can comprise single molecules. As another example, the cluster 106 is an amplified sample. As such, the sample can comprise a cluster of molecules. Combinations of the above approaches can be used.

The analysis substrate 100 includes the sensor layer 108. The sensor layer 108 includes multiple sensor pixels, sometimes referred to as an array of sensor pixels. Each of the sensor pixels is sensitive to one or more forms of light (including, but not limited to, visible light). The sensor layer 108 can generate one or more corresponding output signals based on the detection by at least one of the sensor pixels. For example, the signal(s) can represent an image of the sample at the localization layer 102. In some implementations, the sensor layer 108 includes light-sensitive elements as well as read-out electronics that generate the signal(s) corresponding to the detected light. In some implementations, read-out electronics may tend to make the sensor layer 108 relatively thicker and/or can cause unwanted scattering and absorption of fluorescence. The sensor layer 108 can instead be configured according to backside illumination, wherein the read-out electronics are removed from the side of the sensor layer 108 facing the localization layer 102; instead, the read-out electronics can be implemented elsewhere (e.g., on an opposite side of the light-sensitive elements from the localization layer 102).

The analysis substrate 100 here includes the spacer layer 110. In some implementations, the spacer layer 110 is positioned between the localization layer 102 and the sensor layer 108. For example, one or more faces of the spacer layer 110 can abut the localization layer 102. For example, one or more faces of the spacer layer 110 can abut the sensor layer 108. In some implementations, the spacer layer 110 is part of (e.g., integral to, or integrated with) the localization layer 102. In some implementations, the spacer layer 110 and the localization layer 102 are made of materials that are at least substantially identical to each other. In some implementations, the spacer layer 110 is part of (e.g., integral to, or integrated with) the sensor layer 108. In some implementations, the spacer layer 110 and the sensor layer 108 are made of materials that are at least substantially identical to each other. The spacer layer 110 can include one or more materials that is conductive to electromagnetic radiation (e.g., to visible light). In some implementations, the spacer layer 110 comprises a planar waveguide. For example, a planar waveguide can help prevent negative effects from the excitation light and act as an excitation filter. The spacer layer 110 has a thickness (here, in a direction between the localization layer 102 and the sensor layer 108) which is set to allow propagation of fluorescence over a desirable number or proportion of pixels. For example, the number/proportion of pixels can be defined by striking a balance between: a) the ability to localize a centroid, and b) reducing or minimizing the space that a point-spread function occupies on the sensor layer 108 to increase or maximize the imaging throughput in a process of simultaneously imaging many samples (e.g., a large number of nanowells). That is, the thickness of the spacer layer 110 can be selected based on a propagation of fluorescence from the sample, as is described in other examples herein.

The analysis substrate 100 and/or other implementations described herein can use one or more types of filter. In some implementations, an excitation filter is used to block excitation light from reaching the sensor layer 108. The excitation filter can be positioned between the sample and the sensor layer 108 (e.g., between the localization layer 102 and the spacer layer 110, or between the spacer layer 110 and the sensor layer 108). The excitation filter can be made from one or more materials (e.g., optical glass) capable of wavelength band selection. For example, the spacer layer 110 can serve as an excitation filter. In some implementations, an emission filter is used to select the relevant wavelength band(s) of the fluorescence from the dye(s) and block one or more other wavelength bands. The emission filter can be made from one or more materials (e.g., optical glass) capable of wavelength band selection. For example, the spacer layer 110 can serve as an emission filter.

The analysis substrate 100 and/or other implementations described herein can use one or more types of diffractive optical elements. For example, a diffractive optical element can be used (instead of or in addition to a spacer) to shape the emission profile of the fluorescence onto the sensor pixels. In some implementations, a diffractive optical element can enable a reduced spacing between the localization layer 102 and the sensor layer 108. In some implementations, the diffractive optical element can include a Fresnel lens. In some implementations, the diffractive optical element can include a diffraction grating provided within the volume of, or on the surface of, an optical substrate. The diffraction grating can include one or more forms of periodic structure associated with a variation in the effective refractive index and/or effective optical absorption. In some implementations, a grating can be formed by removing or omitting material from a substrate. For example, a substrate can be provided with a set of slits and/or grooves therein to form a grating. In some implementations, a grating can be formed by adding material to a substrate. For example, a substrate can be provided with a set of ridges, bands or other protruding longitudinal structures to form the grating. Combinations of these approaches can be used. In some implementations, a diffractive optical component can be provided at one or more of the localization layer 102, the spacer layer 110, or the sensor layer 108.

The analysis substrate 100 can be used for one or more types of imaging. In some implementations, the analysis substrate 100 supports near-field imaging. For example, when the sensor layer 108 is implemented as a chip of electronic components, near-field imaging can be provided in that the sample (e.g., the single molecule 104 and/or the cluster 106) is placed close to (e.g., practically in contact with, except for the spacer layer 110) the sensor layer 108. This can allow the sensor layer 108 to image the sample at the localization layer 102 in high resolution, which will be exemplified elsewhere herein. The above example illustrates that the localization layer 102, optionally the spacer layer 110, and the sensor layer 108 can provide near-field imaging of the sample(s).

The sensor layer 108 can make use of one or more fields of view relative to the localization layer 102. In some implementations, the sensor layer 108 can cover an area that is at least substantially the same as the area of the localization layer 102 having the sample(s). This can allow the sensor layer 108 to simultaneously capture an image of at least substantially the entire sample area of the localization layer 102. In such examples, the localization layer 102 and the sensor layer 108 can be at least substantially fixed (e.g., nonmoveable) relative to each other. For example, the spacer layer 110 and the sensor layer 108 can provide a single field of view of the localization layer 102.

The present example illustrates that an analysis substrate (e.g., the analysis substrate 100) can include a localization layer (e.g., the localization layer 102) that is to be provided with a sample (e.g., the single molecule 104 and/or the cluster 106) comprising a nucleotide provided with a fluorescent dye. The analysis substrate can include a sensor layer (e.g., the sensor layer 108) comprising an array of sensor pixels, the localization layer being on-chip relative to the sensor layer, one or more of the sensor pixels to receive a propagation of fluorescence from the fluorescent dye. Optionally, the analysis substrate can include a spacer layer (e.g., the spacer layer 110) between the localization layer and the sensor layer, the spacer layer having a thickness based on the propagation of fluorescence from the fluorescent dye. Optionally, the analysis substrate can include one or more filters (e.g., an excitation and/or emission filter), and/or one or more diffractive optical elements (e.g., a diffraction grating and/or a Fresnel lens).

FIG. 2A shows an example cross section of an analysis substrate 200. The analysis substrate 200 can be used with, or as part of, one or more other examples described elsewhere herein. In some implementations, the analysis substrate 200 can be used for analysis of one or more samples of nucleic acid material. For example, the analysis substrate 200 can be used with SMLM. In some implementations, the analysis substrate 200 can be, or be part of, a flowcell to be used in sequencing.

The analysis substrate 200 includes a localization layer 202. The term localization is here used to illustrate that one or more aspects of a sample will be localized (e.g., have its exact or approximate location determined) relative to the localization layer 202. The localization layer 202 can be positioned at one or more locations of the analysis substrate 200. The present position, being at the "top" of the analysis substrate 200, is shown for illustrative purposes only. The localization layer 202 can include one or more substrates. For example, the localization layer 202 can include a substrate configured for receiving and accommodating one or more samples of nucleic acid material.

The localization layer 202 can include one or more features relating to sample position and/or confinement of electromagnetic radiation. Such electromagnetic radiation can include, but is not limited to, excitation light directed at the sample, background fluorescence, and/or emission light from the sample. One or more patterns can be provided at the localization layer 202. The pattern(s) can be organized (e.g., periodic) or non-organized (e.g., random). In some implementations, a pattern is formed by cavities 204 formed in at least one surface of the localization layer 202. The cavities can be considered to be wells. Here, the cavities 204 are formed in a surface of the localization layer 202 facing away from the rest of the analysis substrate 200. In some implementations, the cavities 204 comprise nanowells. For example, a pattern of nanostructures can be formed by performing a nanoimprinting process at the localization layer 202. In some implementations, the cavities 204 comprise zero-mode waveguides. As such, the localization layer 202 can include at least one zero-mode waveguide. The cavities 204 formed in the localization layer 202 can be associated with a refractive index. For example, electromagnetic radiation that travels in a medium (e.g., scan mix) and reaches the cavities 204 can undergo refraction that depends on the refractive indices of the medium and the cavities 204. In some implementations, the scan mix can be selected at least in part based on the refractive index of the cavities 204. For example, background scattering of excitation light can be reduced if the scan mix has at least a similar refractive index as that of the cavities 204.

Sample(s) at the localization layer 202 can be labeled with fluorescent dyes to be activated by excitation light. In some implementations, sparse activation of the fluorescent molecules can occur so that overlap of the fluorescence from individual fluorescent molecules is eliminated or reduced. For example, the sparse activation can enable useful localization of the respective fluorescent molecules.

The analysis substrate 200 includes a sensor layer 206. The sensor layer 206 includes multiple sensor pixels 208A-208E, sometimes referred to as an array of sensor pixels. In some implementations, the sensor layer 206 includes a two-dimensional array of sensor pixels (e.g., a rectangular area with rows and columns of sensor pixels), of which the sensor pixels 208A-208E are the ones visible in the present cross-section view. Each of the sensor pixels 208A-208E is sensitive to one or more forms of light (including, but not limited to, visible light). The sensor layer 206 can generate one or more corresponding output signals based on the detection by at least one of the sensor pixels. For example, the signal(s) can represent an image of the sample at the localization layer 202.

The analysis substrate 200 can have multiple features at the localization layer 202 for each one of the sensor pixels 208A-208E. In some implementations, multiple cavities 204 can be associated with each of the sensor pixels 208A-208E. For example, the analysis substrate 200 here has four of the cavities 204 for each of the sensor pixels 208A-208E. That is, the sensor layer 206 can image multiple ones of the cavities 204 (that is, one or more sample of each of the cavities) despite the cavities 204 being of a smaller scale (i.e., more densely arranged) than the sensor pixels 208A-208E. This is sometimes referred to as super-resolution.

The analysis substrate 200 includes a spacer layer 210. In some implementations, the spacer layer 210 is positioned between the localization layer 202 and the sensor layer 206. For example, one or more faces of the spacer layer 210 can abut the localization layer 202. For example, one or more faces of the spacer layer 210 can abut the sensor layer 206. In some implementations, the spacer layer 210 is part of (e.g., integral to, or integrated with) the localization layer 202. In some implementations, the spacer layer 210 is part of (e.g., integral to, or integrated with) the sensor layer 206. The spacer layer 210 can include one or more materials that is conductive to electromagnetic radiation (e.g., to visible light). In some implementations, the spacer layer 210 comprises a planar waveguide. The spacer layer 210 has a thickness (here, in a direction from the localization layer 202 and toward the sensor layer 206, or vice versa) that is based on a propagation of fluorescence from the sample.

The spacer layer 210 facilitates the super-resolution of the localization layer 202 by the sensor layer 206. In some implementations, the spacer layer 210 has a thickness (e.g., between the localization layer 202 and the sensor layer 206) to facilitate a certain propagation of fluorescence toward the sensor layer 206, and thereby to allow localization of the corresponding fluorescent due at the localization layer 202. For example, the thickness can provide a specific point-spread function for the fluorescence so that the fluorescent dye can be localized. In some implementations, the spacer layer 210 allows the analysis substrate 200 to be used without one or more structures designed to interfere with electromagnetic radiation between the localization layer 202 and the sensor layer 206. For example, lightpipes and/or curtains have previously been used to prevent cross-talk between sensor pixels, but in the analysis substrate 200 a certain amount of cross-talk is useful in determining localization.

The sensor pixels 208A-208E can include, or be part of, one or more types of circuitry that facilitates detection of impinging electromagnetic radiation. In some implementations, one or more of the sensor pixels 208A-208E includes a photodiode. For example, the photodiode can include a junction between two types of semiconductor materials (e.g., a p-n junction). In some implementations, one or more of the sensor pixels 208A-208E is part of a chip of MOS devices. For example, one or more of the sensor pixels 208A-208E can be a CMOS device for detecting electromagnetic radiation. For example, the sensor layer 206 can comprise a CMOS chip. In some implementations, one or more of the sensor pixels 208A-208E includes a CCD. For example, one or more of the sensor pixels 208A-208E includes a MOS capacitor.

More than one wavelength band of light can be captured in an imaging process. In some implementations, multicolor imaging can be used on-chip with SMLM. FIG. 2B shows an example cross section of the analysis substrate 200 where only the sensor pixel 208E is currently shown, and the sensor pixels 208A-208D (see FIG. 2A) are not currently shown, for simplicity. The analysis substrate 200 includes a filter layer 212 between the localization layer 202 and the sensor layer 206. The filter layer 212 can include one or more color filters. Here, as an example, color filters 212A-212C are shown. More or fewer color filters can be used. The color filters 212A-212C are associated with the sensor pixel 208E in this example and can be arranged in an array (e.g., in a linear or two-dimensional arrangement). Each of the color filters 212A-212C can be associated with a respective color or color band of light. In some implementations, multiple dyes can be used in the solution (e.g., scan mix) that is applied to the sample at the analysis substrate 200. The dyes can emit fluorescent light in respective wavelength bands, and the dye can be named based on the general color of its fluorescence. For example, a blue dye can fluoresce between about 450 nm - about 525 nm, a green dye can fluoresce between about 525 nm - about 570 nm, a yellow dye can fluoresce between about 570 nm - about 625 nm, and a red dye can fluoresce between about 625 nm - about 750 nm. Other dye colors can be used. Here, each of the color filters 212A-212C can be configured to transmit at least a portion of the wavelength band associated with a corresponding one of the color dyes, and to absorb or reflect (that is, not transmit) light in other wavelength bands. The color filters 212A-212C can be made from any substrate or material having a suitable wavelength selectivity at the scale of the localization layer 202 and the sensor pixel 208E. As such, the color filters 212A-212C can allow the sensor pixel 208E to detect further aspects of the molecule being imaged, such as the presence (or absence) of molecule points labeled with different fluorescent dyes. The filter layer 212 can be part of (e.g., integrated with) the spacer layer 210). In some implementations, the filter layer 212 can be positioned between the localization layer 202 and the spacer layer 210. In some implementations, the filter layer 212 can be positioned between the spacer layer 210 and the sensor layer 206.

FIG. 3 shows a graph with an example of a pixel intensity distribution 300 for the analysis substrate 200 in FIGS. 2A-2B. The pixel intensity distribution 300 can be used with, or can be obtained from, one or more other examples described elsewhere herein. The pixel intensity distribution 300 is indicated for respective one of multiple sensor pixels along the horizontal axis (e.g., for each of the sensor pixels 208A-208E in FIG. 2A). The pixel intensity distribution 300 is indicated in terms of sensor output along the vertical axis (e.g., in terms of a voltage, current, or other signal output by the respective sensor pixel). Here, the pixel intensity distribution 300 includes pixel intensities 302A-302E, each corresponding to the output generated by an individual pixel. For example, each of the pixel intensities 302A-302E can be generated by a corresponding one of the sensor pixels 208A-208E in FIG. 2A.

In some implementations, the pixel intensities 302A-302E correspond to a propagation of fluorescence from a fluorescent dye, the propagation received by corresponding ones of the sensor pixels. For example, the pixel intensities 302A-302E can be generated when the propagation of fluorescence from a fluorescent dye in a cavity 204A (FIG. 2A) reaches the sensor pixels 208A-208E. In this example, the pixel intensity 302C is greater than the pixel intensity 302B; the pixel intensity 302B is greater than the pixel intensity 302D; the pixel intensity 302D is greater than the pixel intensity 302A; and the pixel intensity 302A is greater than the pixel intensity 302E. That is, the electromagnetic radiation from the fluorescent dye in the cavity 204A (which can be approximated as a point-like source of light) is not detected by merely a single one of the pixels; rather, the pixel intensity distribution 300 is detected, in form of the pixel intensity distribution 300, across multiple ones of the sensor pixels. This is sometimes referred to as a point-spread function associated with the fluorescent dye. That is, the electromagnetic radiation of the fluorescence event is distributed over a finite spatial region (e.g., two or more sensor pixels) according to the point-spread function.

One or more statistical measures can characterize a pixel intensity distribution. In some implementations, a full-width at half maximum (FWHM) measure can be applied. Here, the pixel intensity 302C represents the maximum of the pixel intensity distribution 300. The FWHM for the pixel intensity distribution 300 is a measure that includes some number. The number can be an integer number or a decimal number. The number can be greater than one sensor pixel, corresponding to a situation where more than one of the sensor pixels receive at least half the maximal intensity on the pixel intensity distribution. The number can be smaller than one sensor pixel, corresponding to a situation where less than one of the sensor pixels receive at least half the maximal intensity on the pixel intensity distribution. In the latter example, the illumination may nevertheless spread over multiple sensor pixels and be useful for localization. In some implementations, an analysis substrate e.g., the analysis substrate 200 in FIGS. 2A-2B, can be configured so that the point-spread function provides a FWHM of about 0.5, or about 1, or about 1.5, or about 2, or about 10. That is, the thickness of the spacer layer 210 can be selected based on a predefined FWHM of the propagation of fluorescence from the fluorescent dye.

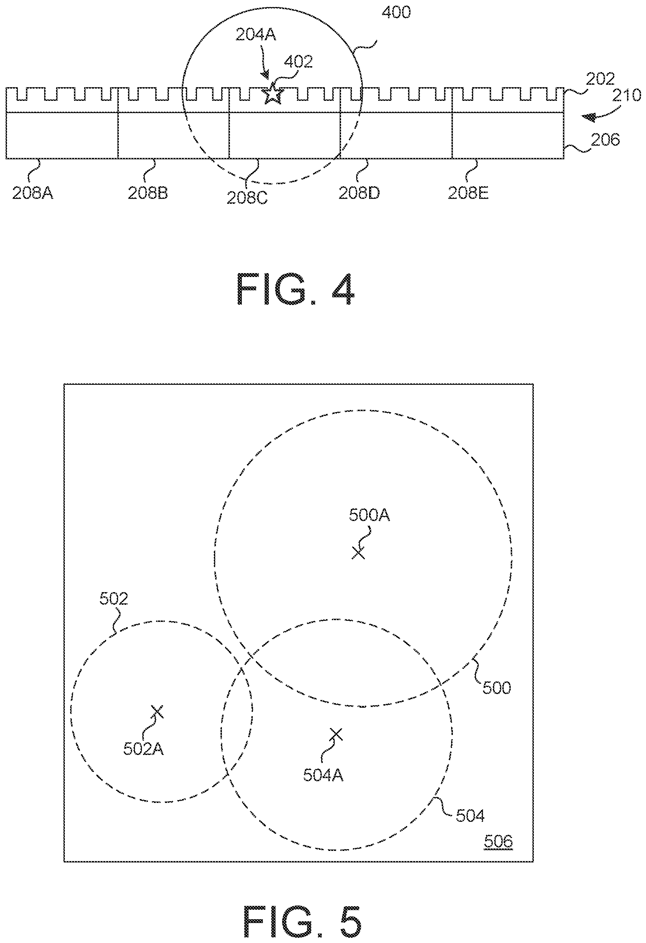

FIG. 4 shows an example of a propagation 400 of fluorescence in the analysis substrate 200 of FIGS. 2A-2B. Here, a fluorescence 402 is schematically indicated as a star symbol at the cavity 204A of the localization layer 202. The propagation 400 is here schematically illustrated as having circular shape. The fluorescent dye molecule can be considered a dipole emitter that is rotating freely. For example, in a three-dimensional situation the propagation 400 can be at least substantially spherically symmetrical.

The propagation 400 impinges on some, or all, of the sensor pixels 208A-208E. At those of the sensor pixels 208A-208E that are relatively near the fluorescence 402, the fluorescence will contribute significantly to the sensor pixel signal (e.g., by surpassing a signal threshold at the near sensor pixels). At those of the sensor pixels 208A-208E that are relatively far from the fluorescence 402, the fluorescence will not contribute significantly to the sensor pixel signal (e.g., by not surpassing a signal threshold at the far sensor pixels). Here, the propagation 400 is received by the sensor pixels 208B, 208C, and 208D, but not by the sensor pixels 208A or 208E. For example, when the propagation 400 reaches the sensor pixels 208A or 208E the intensity or brightness of the propagation 400 may be too diminished to be registered by the respective sensor pixel 208A or 208E. As such, due to the thickness of the spacer layer 210, the propagation 400 of fluorescence is registered by a certain proportion of the sensor pixels 208A-208E (in this example three of five sensor pixels). Part of the circle of the propagation 400 is dashed to indicate that the electromagnetic radiation does not propagate through the sensor layer 206.

FIG. 5 shows an example of pixel intensity distributions 500, 502, and 504 at an array 506 of sensor pixels. The array 506 of pixel sensors can be part of an analysis substrate (e.g., the analysis substrate 100 in FIG. 1 and/or the analysis substrate 200 in FIGS. 2A-2B) and is here shown in a plan view such that a plane in which sensor pixels (not shown) are arranged lies in the plane of the illustration. The pixel intensity distributions 500, 502, or 504, and/or the array 506, can be used with, or as part of, one or more other examples described elsewhere herein.

Each of the pixel intensity distributions 500, 502, and 504 is the result of sensor pixels detecting a corresponding fluorescence, such as from a fluorescent dye. Such fluorescence events can be stochastic, that is, occur at random times. There may or may not be at least partial overlap between two or more pixel intensity distributions. Here, the pixel intensity distribution 504 partially overlaps with the pixel intensity distribution 500 and also with the pixel intensity distribution 502, but the pixel intensity distributions 500 and 502 do not overlap each other. As noted earlier, each of the pixel intensity distributions 500, 502, and 504 has a finite size in two-dimensional image space because of the point-spread function associated with the analysis substrate. The pixel intensity distributions 500, 502, and 504 are here schematically illustrated as dashed circular shapes; in reality each of them may be more akin to a fuzzy and/or blurry blob of light, as represented by the sensor pixels of the array 506. As such, the pixel intensity distributions 500, 502, and 504 may not have a readily identifiable outer periphery.

It may be useful to determine or estimate the location of the fluorescent dye corresponding to the respective pixel intensity distributions 500, 502, and 504. One or more functions can be fit to the image data of at least one of the pixel intensity distributions 500, 502, and 504 for such an estimation. In some implementations, the fitting can be done using a Gaussian function:

$$f(x) = ae^{-\frac{(x-b)^2}{2c^2}},$$

where $x$ represents a spatial parameter (e.g., a location on the array 506), and $a$, $b$, and $c$ are parameters to be adjusted in the fitting. Fitting the above function to any of the pixel intensity distributions 500, 502, and 504 can be considered a search for the centroid of that particular pixel intensity distribution. Here, a centroid 500A is shown as having been determined (e.g., by function fitting) for the pixel intensity distribution 500; a centroid 502A is shown as having been determined (e.g., by function fitting) for the pixel intensity distribution 502; and a centroid 504A is shown as having been determined (e.g.,

by function fitting) for the pixel intensity distribution 504. The determination or estimation of the centroid can be considered a localization of the corresponding fluorescent dye that gave rise to the respective pixel intensity distribution. As such, the analysis substrate can be said to provide localization-based super-resolution by way of near-field imaging (e.g., using on-chip sample placement). Localization-based super-resolution can allow imaging at a higher sample density (e.g., nanowell density) than one sample/nanowell per pixel. That is, the above example illustrates that analyzing a sample can include identifying, using a signal of a sensor layer, a pixel intensity distribution (e.g., the pixel intensity distributions 500, 502, or 504) due to a point spread function. The analysis can include determining a centroid (e.g., the centroids 500A, 502A, or 504A) of the pixel intensity distribution by fitting a function to the pixel intensity distribution. In some implementations, an Airy function can instead or also be used. In some implementations, neither a Gaussian nor an Airy function may be used.

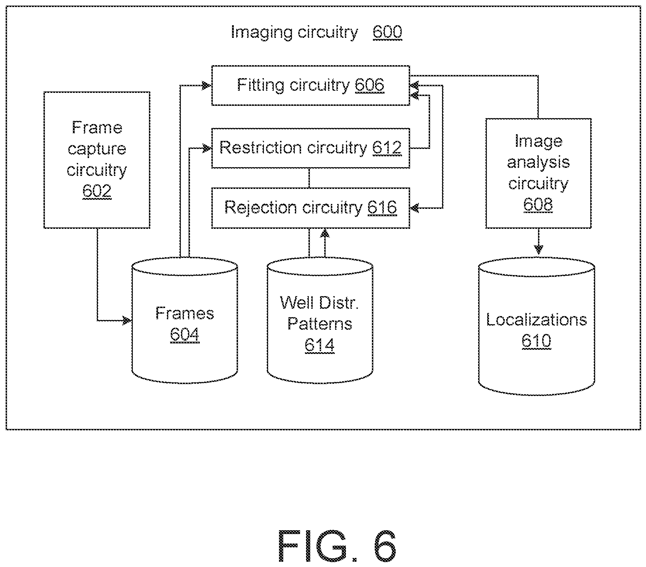

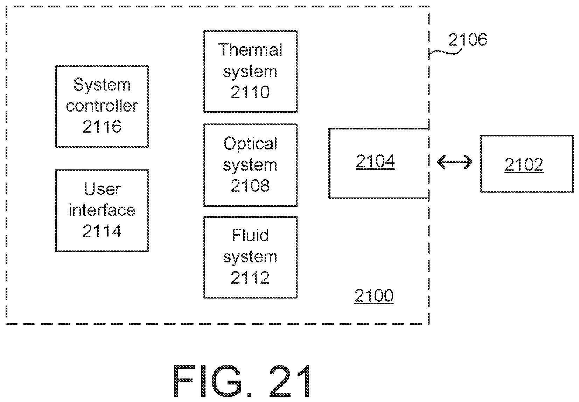

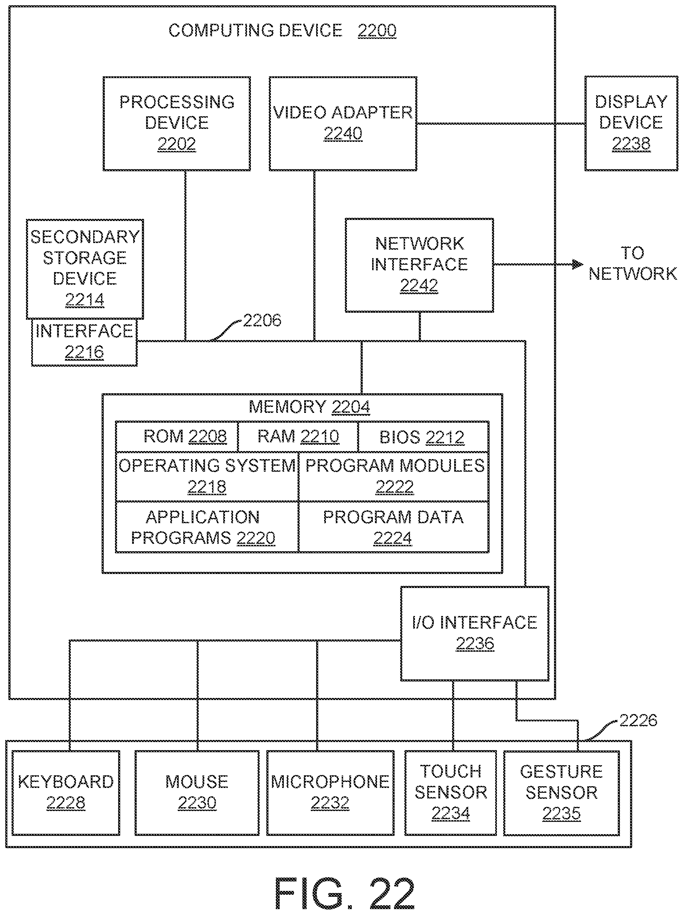

FIG. 6 shows an example of imaging circuitry 600 that can be used for analyzing a sample. The imaging circuitry 600 can be implemented using examples described with reference to FIG. 22. The imaging circuitry 600 can be used with one or more other examples described elsewhere herein, including, but not limited to, the system of FIG. 21.

The imaging circuitry 600 can be implemented using at least one processor to execute instructions stored in at least one non-transitory storage medium. In some implementations, the imaging circuitry 600 and/or the at least one processor can be part of a processing component, including, but not limited to, a graphics processing unit (GPU). In some implementations, the imaging circuitry 600 and/or the at least one processor can be part of an application-specific integrated circuit (ASIC). In some implementations, the imaging circuitry 600 can include programmable logic blocks and programmable interconnects (e.g., in form of a field-programmable gate array (FPGA)). The execution can cause the processor(s) to operate according to one or more distinct pieces of circuitry, sometimes referred to as a module, unit, or other component of the overall system. Such components can be distinctly separate from each other, or some or all components can be integrated into each other.

The imaging circuitry 600 can be configured for performing sample analysis using at least one analysis substrate. The imaging circuitry 600 includes frame capture circuitry 602 to capture one or more frames of image information using sensor pixels of an analysis substrate. For example, each frame can include the output (or absence thereof) of each of the sensor pixels in an entire sensor layer of the analysis substrate. For example, one or more frames can include the pixel intensity distributions 500, 502, and 504 (FIG. 5). As such, if the frames were to be presented in successive order, they would show the progressive occurrence of fluorescence of the sample, by respective fluorescent dye molecules. The frame capture circuitry 602 can include an array of sensor pixels, including, but not limited to, the sensor pixels 208A-208E in FIG. 2A. The frame capture circuitry 602 can cause the frames to be held in a store 604 of the imaging circuitry 600 (e.g., in a memory or a drive).

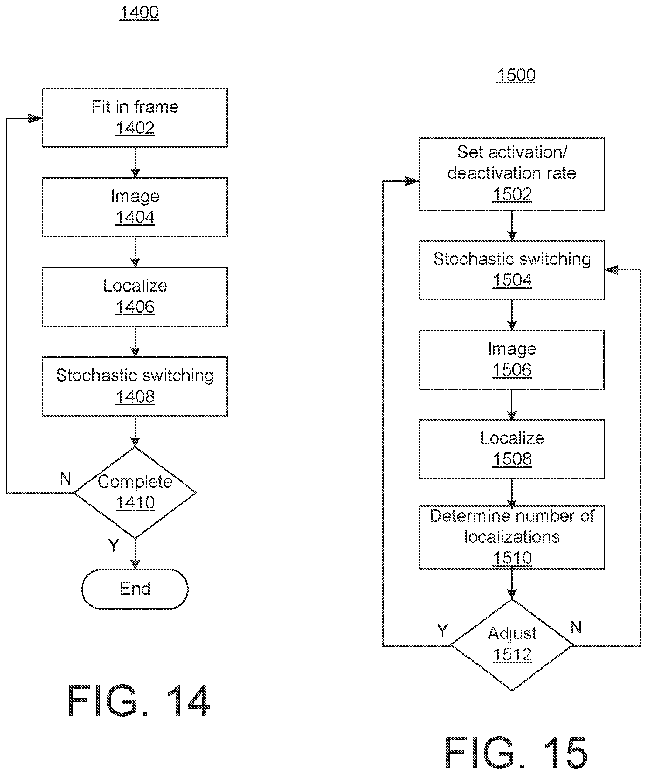

The imaging circuitry 600 can operate in a cyclic (or looping) fashion for imaging. In some implementations, cyclic operations including successive imaging, localization, changing of active fluorophores, imaging, localization, changing of active fluorophores, and so on, can be performed. An example is provided below with reference to FIG. 14.

The imaging circuitry 600 can include fitting circuitry 606 that can fit one or more functions to image data of the frames. The fitting circuitry 606 can obtain one or more frames from the store 604 and can analyze the image data to fit the function(s) to the identified pixel intensity distributions. In some implementations, the fitting circuitry 606 fits a Gaussian function to the image data. The fitting circuitry 606 can provide the outcome(s) of the fitting to image analysis circuitry 608, which can analyze the frame according to its function-fit characteristics, and produce one or more results as an output. In some implementations, the output of the image analysis circuitry 608 is one or more localizations of fluorescent dyes, which can be provided to a store 610.

If the pixel intensity distributions of a given frame are sufficiently far from each other across the array of pixels, applying a fitting function such as a Gaussian function may be relatively straightforward. This situation occurs for example when the samples be distributed relatively sparsely across the array, which counteracts the benefit of dense sample distribution in super-resolution imaging. The imaging circuitry 600 can therefore include one or more components to address actual or potential overlap of pixel intensity distributions. In some implementations, the fitting circuitry 606 can fit separate Gaussian functions to identified peaks of the pixel intensities, for example by first plotting the data of the pixel intensity distribution; correcting for a non-zero baseline, if necessary; applying the fitting function to a first peak; applying the fitting function to another (or subsequent peaks; adding the fitted peaks together; plotting the fitting function with an initial guess for each parameter; applying nonlinear fitting (e.g., by mathematics software); and extracting out the peaks and analyzing their respective centroids.

In some implementations, the imaging circuitry 600 includes restriction circuitry 612 to restrict the fitting function to one or more areas of the array of sensor pixels where samples are known to be located. In some implementations, the pattern of structures at a localization surface can be employed in this regard. For example, if the sizes of, and the spacing between, the cavities 204 (FIG. 2A) are known, then the fitting function can be restricted to consider only image data in locations corresponding to such cavities. Here, a store 614 can contain one or more well (or cavity) distribution patterns that the restriction circuitry 612 can use. For example, the restriction circuitry 612 uses the pattern of the store 614 to instruct the fitting circuitry 606 how to perform the fitting of the function to the image data. As such, the output of the fitting circuitry 606 to the image analysis circuitry 608 can depend on the functionality of the restriction circuitry 612.

In some implementations, the imaging circuitry 600 includes rejection circuitry 616 to reject one or more localizations that fall outside the areas of the substrate structure (e.g., the cavities 204 in FIG. 2A) where samples are known to be located. In some implementations, the pattern of structures at a localization surface can be employed in this regard. For example, if the sizes of, and the spacing between, the cavities 204 (FIG. 2A) are known, then the localization of fluorescent dyes outside such region(s) can be rejected, in order to consider only image data in locations corresponding to cavities where sample are actually located. Here, the store 614 can contain one or more well (or cavity) distribution patterns that the rejection circuitry 616 can use. For example, the rejection circuitry 616 uses the pattern of the store 614 to reject a localization determined by the fitting circuitry 606 (e.g., an identified centroid) based on it falling outside the pattern of wells. The imaging circuitry 600 can include the restriction circuitry 612 which restricts the fitting circuitry 606 to fit the function to the pixel intensity distribution only in at least one area indicated by a well distribution pattern. As such, the output of the fitting circuitry 606 to the image analysis circuitry 608 can depend on the functionality of the rejection circuitry 616.

The above example illustrates that an imaging system (e.g., in FIG. 21) can include an analysis substrate (e.g., the analysis substrate 100 in FIG. 1 and/or the analysis substrate 200 in FIGS. 2A-2B), and imaging circuitry (e.g., the imaging circuitry 600). The analysis substrate can include a localization layer (e.g., the localization layer 202) to be provided with a sample comprising a nucleotide provided with a fluorescent dye; and a sensor layer (e.g., the sensor layer 206) comprising an array of sensor pixels, one or more of the sensor pixels to receive a propagation of fluorescence from the fluorescent dye. The imaging circuitry can image the sample. The imaging circuitry can include fitting circuitry (e.g., the fitting circuitry 606) to identify, using a signal of the sensor layer, a pixel intensity distribution due to a point spread function, and determine a centroid of the pixel intensity distribution by fitting a function to the pixel intensity distribution.

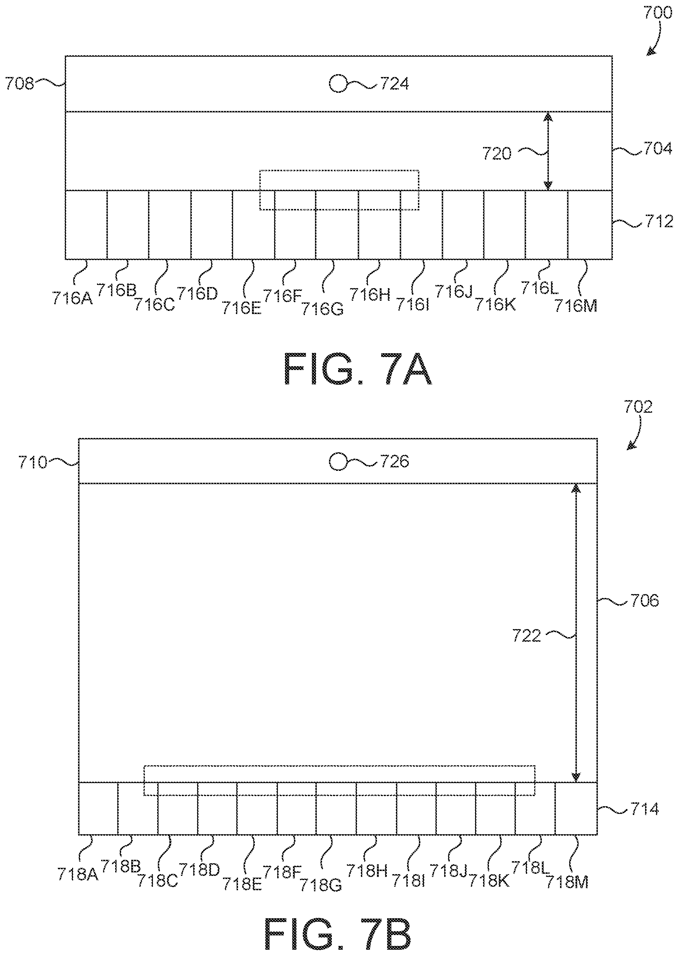

FIGS. 7A-7B show examples of analysis substrates 700 and 702 each having a spacer layer 704 and 706, respectively. The analysis substrates 700 and/or 702 can be used with one or more other examples described elsewhere herein.

Each of the analysis substrate 700 and 702 includes a localization layer 708 or 710, respectively. The term localization is here used to illustrate that one or more aspects of a sample will be localized (e.g., have its exact or approximate location determined) relative to the respective localization layer 708 or 710. The localization layer 708 can be positioned at one or more locations of the analysis substrate 700, and the localization layer 710 can be positioned at one or more locations of the analysis substrate 702. The present positions, being at the "top" of the respective analysis substrate 700 and 702, is shown for illustrative purposes only. Each of the localization layers 708 and 710 can include one or more substrates. For example, the localization layer 708 and/or 710 can include a substrate configured for receiving and accommodating one or more samples of nucleic acid material.

The analysis substrate 700 includes a sensor layer 712, and the analysis substrate 702 includes a sensor layer 714. The sensor layer 712 includes multiple sensor pixels 716A-716M, and the sensor layer 714 includes multiple sensor pixels 718A-718M, each of which layers is sometimes referred to as an array of sensor pixels. In some implementations, the sensor layer 712 and/or 714 includes a two-dimensional array of sensor pixels (e.g., a rectangular area with rows and columns of sensor pixels), of which the sensor pixels 716A-716M, and/or the 718A-718M, are the ones visible in the present cross-section view. Each of the sensor pixels 716A-716M and 718A-718M is sensitive to one or more forms of light (including, but not limited to, visible light). The sensor layers 712 and 714 can generate one or more corresponding output signals based on the detection by at least one of the sensor pixels. For example, the signal(s) can represent an image of the sample at the localization layer 708, or an image of the sample at the localization layer 710.

In some implementations, the spacer layer 704 is positioned between the localization layer 708 and the sensor layer 712. For example, one or more faces of the spacer layer 704 can abut the localization layer 708. For example, one or more faces of the spacer layer 704 can abut the sensor layer 712. In some implementations, the spacer layer 704 is part of (e.g., integral to, or integrated with) the localization layer 708. In some implementations, the spacer layer 704 is part of (e.g., integral to, or integrated with) the sensor layer 712. In some implementations, the spacer layer 704 is not part of (i.e., not integral to, and not integrated with) either of the localization layer 708 or the sensor layer 712. The spacer layer 704 can include one or more materials that is conductive to electromagnetic radiation (e.g., to visible light). In some implementations, the spacer layer 704 comprises a planar waveguide. The spacer layer 704 has a thickness 720 defined between the localization layer 708 and the sensor layer 712 that is based on a propagation of fluorescence from the sample at the localization layer 708.

In some implementations, the spacer layer 706 is positioned between the localization layer 710 and the sensor layer 714. For example, one or more faces of the spacer layer 706 can abut the localization layer 710. For example, one or more faces of the spacer layer 706 can abut the sensor layer 714. In some implementations, the spacer layer 706 is part of (e.g., integral to, or integrated with) the localization layer 710. In some implementations, the spacer layer 706 is part of (e.g., integral to, or integrated with) the sensor layer 714. The spacer layer 706 can include one or more materials that is conductive to electromagnetic radiation (e.g., to visible light). In some implementations, the spacer layer 706 comprises a planar waveguide. The spacer layer 706 has a thickness 722 defined between the localization layer 710 and the sensor layer 714 that is based on a propagation of fluorescence from the sample at the localization layer 710.

In the analysis substrate 700, one or more samples can be positioned at the localization layer 708. The sample(s) can be tagged or otherwise labeled with one or more fluorescent tags. Here, a fluorescent molecule 724 is schematically illustrated at the localization layer 708. For example, the fluorescent molecule 724 can be placed in a nanowell or a zero-mode waveguide. A fluorescence by the fluorescent molecule 724 can be received by alone or more of the sensor pixels 716A-716M. Particularly, the thickness 720 of the spacer layer 704 determines the relative positions of the sample and the sensor layer 712 to each other. Here, for example, the fluorescent molecule 724 generates a propagation of fluorescence that is detected by the sensor pixels 716E-716I. In this example, the fluorescence being "detected by" only a subset of the sensor pixels 716A-716M signifies that the fluorescence will contribute significantly to the detection signal only at the subset of the sensor pixels 716A-716M (e.g., by surpassing a signal threshold) and not at other sensor pixels. By contrast, the propagation of fluorescence from the fluorescent molecule 724 is not detected by the sensor pixels 716A-716D, and also not detected by the sensor pixels 716J-716M. Similarly, the fluorescence being "not detected by" a subset of the sensor pixels 716A-716M signifies that the fluorescence will not contribute significantly to the detection signal at that subset of the sensor pixels 716A-716M (e.g., by being too diffracted to meet a signal threshold). That is, the sensor pixels 716E-716I can be a predefined proportion of the sensor pixels 716A-716M, and the thickness 720 can be selected so that the analysis substrate 700 has the propagation of fluorescence corresponding to detection by the sensor pixels 716E-716I. This provides that the analysis substrate 700 is tuned for localization-based super-resolution imaging, in that the spacer layer 704 has the thickness 720 that is based on the propagation of fluorescence that should be detected from the fluorescent molecule 724.

In the analysis substrate 702, one or more samples can be positioned at the localization layer 710. The sample(s) can be tagged or otherwise labeled with one or more fluorescent tags. Here, a fluorescent molecule 726 is schematically illustrated at the localization layer 710. For example, the fluorescent molecule 726 can be placed in a nanowell or a zero-mode waveguide. A fluorescence by the fluorescent molecule 726 can be received by some or all of the sensor pixels 718A-718M. Particularly, the thickness 722 of the spacer layer 706 determines the relative positions of the sample and the sensor layer 714 to each other. Here, for example, the fluorescent molecule 726 generates a propagation of fluorescence that is detected by the sensor pixels 718B-718L. By contrast, the propagation of fluorescence from the fluorescent molecule 726 is not detected by the sensor pixels 718A or 718M. That is, the sensor pixels 718B-718L can be a predefined proportion of the sensor pixels 718A-718M, and the thickness 722 can be selected so that the analysis substrate 702 has the propagation of fluorescence corresponding to detection by the sensor pixels 718B-718L. This provides that the analysis substrate 702 is tuned for localization-based super-resolution imaging, in that the spacer layer 706 has the thickness 722 that is based on the propagation of fluorescence that should be detected from the fluorescent molecule 726.

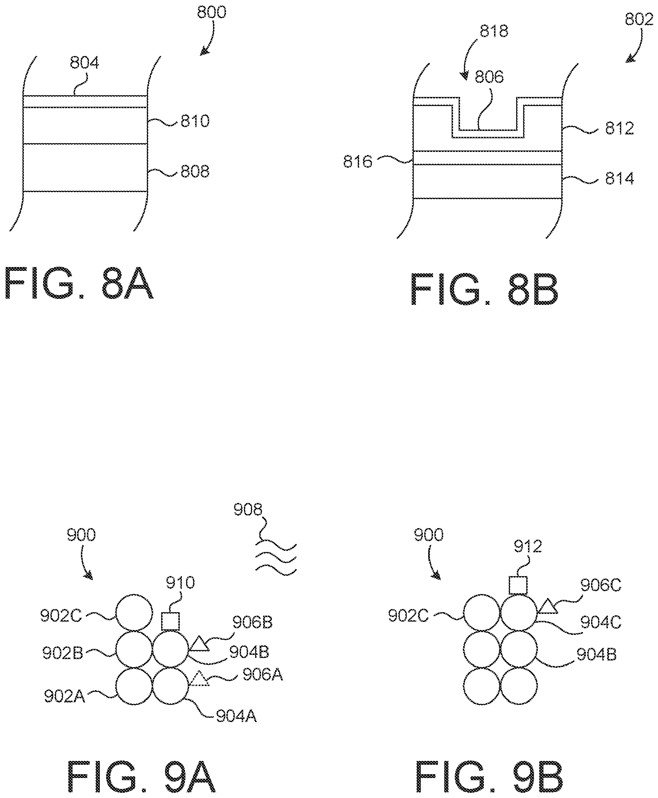

FIGS. 8A-8B show example cross sections of analysis substrates 800 and 802 each having a surface passivation layer 804 and 806, respectively. For clarity, only a portion of the analysis substrates 800 and 802 is shown. The analysis substrates 800 and/or 802 can be used with one or more other examples described elsewhere herein.

In the analysis substrate 800, the surface passivation layer 804 can serve as a localization layer. The term localization is here used to illustrate that one or more aspects of a sample will be localized (e.g., have its exact or approximate location determined) relative to the surface passivation layer 804. The surface passivation layer 804 can be positioned at one or more locations of the analysis substrate 800. The present position, being at the "top" of the analysis substrate 800, is shown for illustrative purposes only. The surface passivation layer 804 can include one or more materials. For example, the surface passivation layer 804 can include poly-ethylene glycol. In some implementations, the surface passivation layer 804 can help with addressing noise in image data. For example, the surface passivation layer 804 can reduce non-specific absorption of fluorescent molecules or other particles in the analysis substrate 800.

The analysis substrate 800 includes a sensor layer 808. The sensor layer 808 can include multiple sensor pixels (not shown), such as an array of sensor pixels. In some implementations, the sensor layer 808 includes a two-dimensional array of sensor pixels (e.g., a rectangular area with rows and columns of sensor pixels. Each of the sensor pixels in the sensor layer 808 is sensitive to one or more forms of light (including, but not limited to, visible light). The sensor layer 808 can generate one or more corresponding output signals based on the detection by at least one of the sensor pixels. For example, the signal(s) can represent an image of the sample at the surface passivation layer 804.

The analysis substrate 800 includes a spacer layer 810. In some implementations, the spacer layer 810 is positioned between the surface passivation layer 804 and the sensor layer 808. For example, one or more faces of the spacer layer 810 can abut the surface passivation layer 804. For example, one or more faces of the spacer layer 810 can abut the sensor layer 808. In some implementations, the spacer layer 810 is part of (e.g., integral to, or integrated with) the surface passivation layer 804. In some implementations, the spacer layer 810 is part of (e.g., integral to, or integrated with) the sensor layer 808. The spacer layer 810 can include one or more materials that is conductive to electromagnetic radiation (e.g., to visible light). In some implementations, the spacer layer 810 comprises a planar waveguide. The spacer layer 810 has a thickness (here, in a direction from the surface passivation layer 804 and toward the sensor layer 808, or vice versa) that is based on a propagation of fluorescence from the sample.

In the analysis substrate 802, the surface passivation layer 806 can be formed at a substrate 812. Collectively, the surface passivation layer 806 and the substrate 812 can be considered a localization layer. The term localization is here used to illustrate that one or more aspects of a sample will be localized (e.g., have its exact or approximate location determined) relative to the localization layer. The substrate 812 can be positioned at one or more locations of the analysis substrate 800. The present position is shown for illustrative purposes only. The surface passivation layer 806 can include one or more materials. For example, the surface passivation layer 806 can include poly-ethylene glycol. In some implementations, the surface passivation layer 806 can help with addressing noise in image data. For example, the surface passivation layer 806 can reduce non-specific absorption of fluorescent molecules or other particles in the analysis substrate 802. The substrate 812 can include one or more materials. In some implementations, the substrate 812 includes a polymer. For example, the substrate 812 can include PAZAM.

The analysis substrate 802 includes a sensor layer 814. The sensor layer 814 can include multiple sensor pixels (not shown), such as an array of sensor pixels. In some implementations, the sensor layer 814 includes a two-dimensional array of sensor pixels (e.g., a rectangular area with rows and columns of sensor pixels. Each of the sensor pixels in the sensor layer 814 is sensitive to one or more forms of light (including, but not limited to, visible light). The sensor layer 814 can generate one or more corresponding output signals based on the detection by at least one of the sensor pixels. For example, the signal(s) can represent an image of the sample at the localization layer.

The analysis substrate 802 includes a spacer layer 816. In some implementations, the spacer layer 816 is positioned between the substrate 812 and the sensor layer 814. For example, one or more faces of the spacer layer 816 can abut the substrate 812. For example, one or more faces of the spacer layer 816 can abut the sensor layer 814. In some implementations, the spacer layer 816 is part of (e.g., integral to, or integrated with) the substrate 812. In some implementations, the spacer layer 816 is part of (e.g., integral to, or integrated with) the sensor layer 814. The spacer layer 816 can include one or more materials that is conductive to electromagnetic radiation (e.g., to visible light). In some implementations, the spacer layer 816 comprises a planar waveguide. The spacer layer 816 has a thickness (here, in a direction from the substrate 812 and toward the sensor layer 814, or vice versa) that is based on a propagation of fluorescence from the sample.

The analysis substrate 802 can include one or more features relating to sample position and/or confinement of electromagnetic radiation. Such electromagnetic radiation can include, but is not limited to, excitation light directed at the sample, background fluorescence, and/or emission light from the sample. The feature(s) can be formed by the surface passivation layer 806 alone, or jointly by at least the surface passivation layer 806 and the substrate 812. One or more patterns can be provided at the localization layer. The pattern(s) can be organized (e.g., periodic) or non-organized (e.g., random). In some implementations, a pattern is formed by one or more cavities 818 formed by at least one surface of the surface passivation layer 806. The cavities can be considered to be wells. Here, the cavity 818 is formed in a surface of the analysis substrate 802 facing away from the spacer layer 816. In some implementations, the cavity 818 comprises a nanowell. For example, one or more nanostructures can be formed by performing a nanoimprinting process. In some implementations, the cavity 818 comprises a zero-mode waveguide.

FIGS. 9A-9B show an example of SBS-based sequencing chemistry involving photoswitching. In general, SBS can include one or more cycles of incorporation of a blocked fluorescent nucleotide, imaging of the fluorescent dye, and cleavage to allow a next cycle. This example shows nucleic acid material 900 to be sequenced. The nucleic acid material 900 can be used with one or more other examples described elsewhere herein. For simplicity, the illustration only shows the elements or parts of the nucleic acid material 900 that are discussed in the following examples. As such, other elements or parts (not shown) can be included in the nucleic acid material 900.

A template strand is here schematically shown to include template nucleotides 902A-902C. For example, the template strand may have been obtained in a sample preparation step by denaturing a sample of nucleic acid material, including, but not limited to, by application of heat and/or a chemical agent to the sample. The SBS process will successively add nucleotides, based on the nucleotides in the template strand, in a controlled manner. Here, a nucleotide 904A has been checked for complementarity with the template strand, specifically with the template nucleotide 902A. For example, the nucleotide cytosine is complementary to the nucleotide guanine; the nucleotide adenine is complementary to the nucleotide thymine; and so on. The nucleotide 904A and one or more nucleotides yet to be added is here referred to as a primer strand. The nucleotide 904A may have been covalently attached to another component (not shown) of the primer strand, including, but not limited to, a primer. A nucleotide 904B has been checked for complementarity with the template strand, specifically with the template nucleotide 902B, and covalently attached to the nucleotide 904A.

In an implementation where the nucleic acid material 900 is one of many such materials in a sample, a significant number of incorporations can occur during the incorporation stage. The fluorescent dyes can be photodeactivated to reduce the occurrence of overlapping propagations of fluorescence. The nucleotides of the sequencing reagent, which can be ffNs, can be conjugated to photoswitching dyes rather than to standard SBS dyes. Here, the nucleotide 904A may have originally been labeled with a photoswitching dye 906A, and the nucleotide 904B is currently labeled with a photoswitching dye 906B. During the SBS process, the photoswitching dyes 906A-906B will be photodeactivated by illumination with an excitation beam. The photoswitching dye 906A that was bonded to a previously incorporated base (the nucleotide 904A) may have been removed from that base in postincorporation cycles of cleaving in the imaging process. As such, the photoswitching dye 906A is no longer bound to the nucleotide 904A after incorporation of the nucleotide 904B, and this is here schematically indicated by representing the photoswitching dye 906A using dashed lines. Moreover, the SBS here is performed in presence of a photoswitching buffer 908. For example, the photoswitching buffer 908 can be introduced in a scan mix for the SBS. The photoswitching buffer 908 can include one or more photoswitching agents, including, but not limited to, tris(2-carboxyethyl)phosphine (TCEP) or β-mercaptoethylamine (MEA). The photoswitching buffer 908 can control or otherwise affect the tendency of the photoswitching dyes 906A-906B to transition between active and inactive states. For example, due to the presence of the photoswitching buffer 908, the photoswitching dyes 906A-906B will "blink"; that is, their emission of fluorescence will exhibit a blinking behavior of an active (e.g., fluorescent) state followed by an inactive (e.g., dark) state. The activation rate of the fluorescent dyes can be controlled at least in part by selection of the wavelength for the activation light source (e.g., laser). In some implementations, a relatively shorter wavelength can be used for controlling the activation rate. For example, with a red dye (e.g., Exciton Oxazine 750) the wavelength of the activation laser can be about 400-410nm, such as about 403-407 nm (e.g., 405 nm).

The nucleic acid material 900 includes a block 910 coupled to the nucleotide 904B. In some implementations, the block 910 prevents incorporation of a nucleotide complementary to the template nucleotide 902C. In some implementations, the block 910 may include a "3' block" and/or a "hydroxy block." For example, the block 910 can include one or more blocking groups described in U.S. 9,150,896, the disclosure of which is incorporated herein by reference.

Upon removal of the block 910 from the nucleotide 904B, incorporation of another nucleotide can occur. FIG. 9B schematically illustrates that a nucleotide 904C has been incorporated into the primer strand by way of bonding to the nucleotide 904B. Here, the nucleotide 904C is labeled with a photoswitching dye 906C. A block 912 is coupled to the nucleotide 904C. For simplicity, the template strand is not explicitly shown to currently overhang the primer strand after incorporation of the nucleotide 904C. In some implementations, the template strand can include further templating nucleotides (not shown) so as to overhang the primer strand after incorporation of the nucleotide 904C. For example, the illustration of this example in FIGS. 9A-9B does not portray polymerization of a single base template overhang into a blunt end.

In some implementations involving the photoswitching buffer 908, it can be determined whether the photoswitching buffer 908 affects (e.g., is harmful to) sequencing metrics. In some implementations involving the photoswitching dyes 906A-906C it can be ensured that the photoswitching dyes 906A-906C exhibits one or more other characteristics relevant to SBS. Such characteristics can include, but are not limited to, excitation and/or emission wavelength, stability, and/or blocking or deblocking performance.

A nucleotide can be associated with one or more fluorescent dyes. For example, this can help reduce, or in some instances even eliminate, signal issues and/or reduce sensitivity requirements of the sensor layer (e.g., the sensor layer 206 in FIGS. 2A-2B). One or more of the photoswitching dyes 906A-906C can represent multiple fluorescence probes associated with the corresponding nucleotide.

The above example illustrates that a method (e.g., of performing sequencing or other analysis) can include introduction of a photoswitching buffer (e.g., the photoswitching buffer 908) at a localization layer (e.g., of one or more analysis substrates described elsewhere herein) before receiving the propagation of fluorescence. In particular, the propagation of fluorescence can be generated by a photoswitching dye (e.g., the photoswitching dyes 906A, 906B, and/or 906C.

FIGS. 10A-10B show an example of SBS-based sequencing chemistry. The example involves nucleic acid material 1000 which can be used with one or more other examples described elsewhere herein. A template strand is here schematically shown to include template nucleotides 1002A-1002C. For example, the template strand may have been obtained in a sample preparation step by denaturing a sample of nucleic acid material, including, but not limited to, by application of heat and/or a chemical agent to the sample. The SBS process will successively add nucleotides, based on the nucleotides in the template strand, in a controlled manner.

Here, a nucleotide 1004A has been checked for complementarity with the template strand, specifically with the template nucleotide 1002A. A nucleotide 1004B has been checked for complementarity with the template strand, specifically with the template nucleotide 1002B, and covalently attached to the nucleotide 1004A. For simplicity, the illustration only shows the elements or parts of the nucleic acid material 1000 that are discussed in the following examples. As such, other elements or parts (not shown) can be included in the nucleic acid material 1000.

The nucleotides 1004A-1004B were here not originally tagged or otherwise labeled with a fluorescent dye. Rather, the nucleotide 1004A is associated with a sticky element 1006A, and the nucleotide 1004B is associated with a sticky element 1006B. Each of the sticky elements 1006A-1006B can be considered a capture moiety. The functionality of either or both of the sticky elements 1006A-1006B can involve at least temporary attraction between a first element to which the corresponding one of the nucleotides 1004A-1004B is conjugated, and a second element to which the fluorescent dye is conjugated. In some implementations, the sticking between the first and second elements can be transient and dynamic. For simplicity of the illustration, each of the sticky elements 1006A-1006B is shown as conjugated to the respective one of the nucleotides 1004A-1004B. In some implementations, the sticky elements 1006A-1006B are present at the nucleotides 1004A-1004B upon introduction of the sequencing reagent, and at the time of incorporation of the respective nucleotides 1004A-1004B into the template strand. The sticky elements 1006A-1006B facilitate that fluorescent dyes transiently and stochastically will bind to the nucleotides 1004A-1004B. Here, a fluorescent dye 1008A is shown as bound to the nucleotide 1004A by way of the sticky element 1006A, and fluorescent dyes 1008B-1008C are shown as suspended in solution (e.g., in sequencing reagent) adjacent to the nucleic acid material 1000. The sticky elements 1006A-1006B can make use of any suitable bonding technique between the nucleotides 1004A-1004B and the fluorescent dyes 1008A-1008C. For example, the sticky elements 1006A-1006B can facilitate a direct covalent bond between the nucleotide 1004A or 1004B and a corresponding one of the fluorescent dyes 1008A-1008C. As another example, the sticky elements 1006A-1006B can facilitate a staining or intercalation of one of the fluorescent dyes 1008A-1008C relative to a corresponding one of the nucleotides 1004A-1004B. As another example, the sticky elements 1006A-1006B can facilitate an indirect labeling via binding of a ligand binder of the fluorescent dyes 1008A-1008C to a ligand covalently attached to a corresponding one of the nucleotides 1004A-1004B. As another example, the sticky elements 1006A-1006B can facilitate an indirect labeling via binding of a nucleic acid binder of the fluorescent dyes 1008A-1008C to a corresponding one of the nucleotides 1004A-1004B. As another example, the sticky elements 1006A-1006B can facilitate a binding of the respective one of the fluorescent dyes 1008A-1008C to a corresponding one of the nucleotides 1004A-1004B via streptavidin-biotin interaction. For example, streptavidin can be bound to the nucleotide, and biotin can be bound to the fluorescent dye, or vice versa. As another example, the sticky elements 1006A-1006B can facilitate a binding of the respective one of the fluorescent dyes 1008A-1008C to a corresponding one of the nucleotides 1004A-1004B via antibody-antigen interaction. For example, an antibody can be bound to the fluorescent dye, and an antigen can be bound to the nucleotide, or vice versa. In some implementations, an antibody fragment can be used in a capture moiety. For example, a single-domain antibody, a single monomeric variable antibody domain, or a nanobody, can be used. One or more of the fluorescent dyes 1008A-1008C can represent multiple fluorescence probes associated with the corresponding nucleotide.

The fluorescent dye 1008A can be cleaved and removed from the primer strand after imaging and before a next incorporation. In some implementations, the sticky element 1006A can also be cleaved and removed after imaging and before a next incorporation. This is schematically illustrated by representing the fluorescent dye 1008A and the sticky element 1006A using dashed lines.

After incorporation of the nucleotide 1004B, the nucleic acid material 1000 and other molecules can constitute a dark cluster due to the absence of fluorescent material at the nucleotide 1004B. The nucleic acid material 1000 includes a block 1010 coupled to the nucleotide 1004B. In some implementations, the block 1010 prevents incorporation of a nucleotide complementary to the template nucleotide 1002C. Upon removal of the block 1010 from the nucleotide 1004B, incorporation of another nucleotide can occur.

FIG. 10B schematically illustrates that the fluorescent dye 1008B has been bound to the nucleotide 1004B by way of the sticky element 1006B, and that fluorescent dye 1008C is suspended in solution (e.g., in sequencing reagent) adjacent to the nucleic acid material 1000. The bonding can include transient and stochastic combination of the fluorescent dye 1008B and the nucleotide 1004B with each other. The attendant fluorescence can be used for a localization process where an image of the sample material (e.g., of multiple single molecules and/or clusters) is gradually built up over cycles. As such, the approach in the present example may not involve any photoswitching buffer, or any photodeactivation before imaging.

In some implementations, a rate of blinking (e.g., fluorescence on/off) can be controlled or influenced via a concentration of the fluorescent dyes 1008A-1008C in the solution, and/or by regulating the binding affinity during molecular design. For example, this approach can be advantageously robust for single-molecule imaging, in that multiple blinking events may occur for each molecule.

The above example illustrates that in a method (e.g., of performing sequencing or other analysis), a sample (e.g., the nucleic acid material 1000) can include a sticky element (e.g., the sticky element 1006B), and a propagation of fluorescence is generated by a fluorescent dye (e.g., the fluorescent dye 1008B) that becomes attached to the sample by way of the sticky element.

FIGS. 11A-11B show an example of sequencing chemistry involving real-time observation of incorporation. The example involves nucleic acid material 1100 which can be used with one or more other examples described elsewhere herein. A template strand is here schematically shown to include template nucleotides 1102A-1102B. For example, the template strand may have been obtained in a sample preparation step by denaturing a sample of nucleic acid material, including, but not limited to, by application of heat and/or a chemical agent to the sample. The SBS process will successively add nucleotides, based on the nucleotides in the template strand, in a controlled manner. For simplicity, the illustration only shows the elements or parts of the nucleic acid material 1100 that are discussed in the following examples. As such, other elements or parts (not shown) can be included in the nucleic acid material 1100.

Here, a nucleotide 1104A has been checked for complementarity with the template strand, specifically with the template nucleotide 1102A. The nucleotide 1104A and one or more nucleotides yet to be added is here referred to as a primer strand. The nucleotide 1104A may have been covalently attached to another component (not shown) of the primer strand, including, but not limited to, a primer. A fluorescent dye 1106A is shown as bound to the nucleotide 1104A. A nucleotide 1104B is shown suspended in solution (e.g., in sequencing reagent) adjacent to the nucleic acid material 1100. The nucleotide 1104B has bound to it a fluorescent dye 1106B and a blocker 1108. A nucleotide 1104C is shown suspended in solution (e.g., in sequencing reagent) adjacent to the nucleic acid material 1100. The nucleotide 1104C has bound to it a fluorescent dye 1106C and a blocker 1110. For example, each of the blockers 1108 and 1110 can be a reversible terminator. One or more of the fluorescent dyes 1106A-1106C can represent multiple fluorescence probes associated with the corresponding nucleotide.

In some implementations, fluorescent activation occurs via nucleotide incorporation. Stated differently, imaging and incorporation can occur at least substantially simultaneously. The nucleotides 1104B-1104C in FIG. 11A and their related elements can be diffusing relatively rapidly in the solution; as a result, their on-camera appearance can be out-of-focus background blur. This is schematically indicated by representing the nucleotides 1104B-1104C and their related elements using dashed lines. Upon incorporation of the nucleotide 1104B into the primer strand, however, the nucleotide 1104B can become localized and stay in one place, resulting in the nucleotide 1104B turning up as fluorescent light captured by the camera or other image sensor (e.g., an array of sensor pixels). For example, tuning of blinking on/off-rate can be achieved via tuning of polymerase or dye concentration. Photodeactivation can occur via bleaching of the dye or by deblocking after incorporation and imaging. After imaging, deblocking can be performed. For simplicity, the template strand is not explicitly shown to currently overhang the primer strand in FIG. 11B. In some implementations, the template strand can include further templating nucleotides (not shown) so as to overhang the primer strand after incorporation. For example, the illustration of this example in FIGS. 11A-11B does not portray polymerization of a single base template overhang into a blunt end.

The above example illustrates that in a method (e.g., of performing sequencing or other analysis), receiving propagation of fluorescence from a fluorescent dye using at least one sensor pixel can include imaging a fluorescent dye (e.g., the fluorescent dye 1106B) as the fluorescent dye becomes incorporated into the sample.

FIGS. 12A-12C show another example of sequencing chemistry involving real-time observation of incorporation. The example involves nucleic acid material 1200 which can be used with one or more other examples described elsewhere herein. A template strand is here schematically shown to include template nucleotides 1202A-1202B. For example, the template strand may have been obtained in a sample preparation step by denaturing a sample of nucleic acid material, including, but not limited to, by application of heat and/or a chemical agent to the sample. The process will successively add nucleotides based on the nucleotides in the template strand. For simplicity, the illustration only shows the elements or parts of the nucleic acid material 1200 that are discussed in the following examples. As such, other elements or parts (not shown) can be included in the nucleic acid material 1200.

Here, a nucleotide 1204A has been checked for complementarity with the template strand, specifically with the template nucleotide 1202A. The nucleotide 1204A and one or more nucleotides yet to be added is here referred to as a primer strand. The nucleotide 1204A may have been covalently attached to another component (not shown) of the primer strand, including, but not limited to, a primer. No fluorescent dye is currently shown bonded to the nucleotide 1204A; rather, a fluorescent dye that was bonded to the nucleotide 1204A pre-incorporation may have been cleaved upon the incorporation occurring. Nucleotides 1204B-1204C are shown suspended in solution (e.g., in sequencing reagent) adjacent to the nucleic acid material 1200. The nucleotide 1204B has a fluorescent dye 1206 bound to it by way of a phosphate tail 1208 that may be part of the nucleotide 1204B. The nucleotide 1204C has a fluorescent dye 1210 bound to it by way of a phosphate tail 1212 that may be part of the nucleotide 1204C. Each of the phosphate tails 1208 and 1212 can include some or all of a phosphate group that is part of the respective nucleotide 1204B-1204C.

One or more of the fluorescent dyes 1206 and 1210 can represent multiple fluorescence probes associated with the corresponding nucleotide.

The nucleotides 1204B-1204C are unblocked. In one implementation, this means that a most recent incorporation of a nucleotide into the primer strand, such as the incorporation of the nucleotide 1204A, does not prevent incorporation of a next successive nucleotide into the primer strand, such as a nucleotide complementary to the template nucleotide 1202B.

The nucleotides 1204B-1204C in FIG. 12A and their related elements can be diffusing relatively rapidly in the solution; as a result, their on-camera appearance can be out-of-focus background blur. This is schematically indicated by representing the nucleotides 1204B-1204C and their related elements using dashed lines. Upon incorporation of the nucleotide 1204B into the nucleic acid material 1200, for example, the nucleotide 1204B can become localized as complementary to the template nucleotide 1202B and stay in one place, resulting in the nucleotide 1204B turning up as fluorescent light captured by the camera or other image sensor (e.g., an array of sensor pixels). Imaging and incorporation can occur at least substantially simultaneously. FIG. 12B shows that the nucleotide 1204B has been incorporated into the primer strand by way of covalent attachment to the nucleotide 1204A. The incorporation can trigger a cleaving. In some implementations, the incorporation cleaves the phosphate tail 1208, thereby severing the bond between the fluorescent dye 1206 and the nucleotide 1204B. As such, the incorporation of the nucleotide can act as a stochastic activation of the fluorescent dye. FIG. 12C schematically shows that the nucleotide 1204B no longer has a fluorescent dye bound to it. For simplicity, the template strand is not explicitly shown to currently overhang the primer strand after incorporation of the nucleotide 1204B. In some implementations, the template strand can include further templating nucleotides (not shown) so as to overhang the primer strand after incorporation of the nucleotide 1204B. For example, the illustration of this example in FIGS. 12A-12C does not portray polymerization of a single base template overhang into a blunt end.

The above example illustrates that in a method (e.g., of performing sequencing or other analysis) wherein a fluorescent dye is attached to a nucleotide by a phosphate tail (e.g., the phosphate tail 1208), the phosphate tail can be cleaved during incorporation of the nucleotide into the sample.

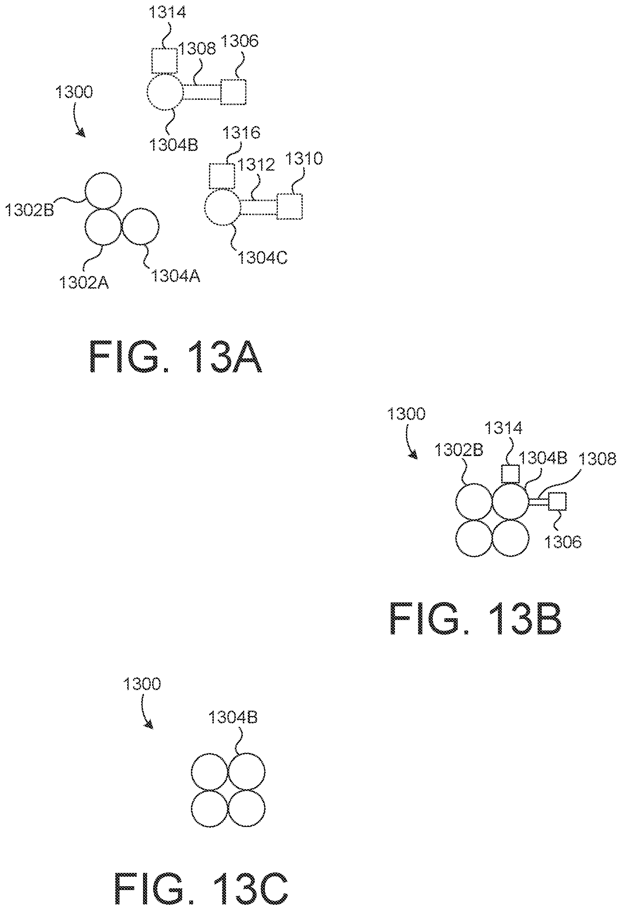

FIGS. 13A-13C show another example of sequencing chemistry. The example involves nucleic acid material 1300 which can be used with one or more other examples described elsewhere herein. A template strand is here schematically shown to include template nucleotides 1302A-1302B. For example, the template strand may have been obtained in a sample preparation step by denaturing a sample of nucleic acid material, including, but not limited to, by application of heat and/or a chemical agent to the sample. The process will successively add nucleotides based on the nucleotides in the template strand. For simplicity, the illustration only shows the elements or parts of the nucleic acid material 1300 that are discussed in the following examples. As such, other elements or parts (not shown) can be included in the nucleic acid material 1300.

Here, a nucleotide 1304A has been checked for complementarity with the template strand, specifically with the template nucleotide 1302A. The nucleotide 1304A and one or more nucleotides yet to be added is here referred to as a primer strand. The nucleotide 1304A may have been covalently attached to another component (not shown) of the primer strand, including, but not limited to, a primer. No fluorescent dye is currently shown bonded to the nucleotide 1304A; rather, a fluorescent dye that was bonded to the nucleotide 1304A pre-incorporation may have been cleaved upon the incorporation occurring. Nucleotides 1304B-1304C are shown suspended in solution (e.g., in sequencing reagent) adjacent to the nucleic acid material 1300. The nucleotide 1304B has a fluorescent dye 1306 bound to it by way of a phosphate tail 1308 that may be part of the nucleotide 1304B. The nucleotide 1304C has a fluorescent dye 1310 bound to it by way of a phosphate tail 1312 that may be part of the nucleotide 1304C. Each of the phosphate tails 1308 and 1312 can include some or all of a phosphate group that is part of the respective nucleotide 1304B-1304C. The nucleotide 1304B has bound to it a blocker 1314. The nucleotide 1304C has bound to it a blocker 1316. One or more of the fluorescent dyes 1306 and 1310 can represent multiple fluorescence probes associated with the corresponding nucleotide.

Upon incorporation of the nucleotide 1304B into the nucleic acid material 1300, for example, the nucleotide 1304B can become localized as complementary to the template nucleotide 1302B and stay in one place, resulting in the nucleotide 1304B turning up as fluorescent light captured by the camera or other image sensor (e.g., an array of sensor pixels). FIG. 13B shows that the nucleotide 1304B has been incorporated. The incorporation can trigger a cleaving. In some implementations, the incorporation cleaves the phosphate tail 1308, thereby severing the bond between the fluorescent dye 1306 and the nucleotide 1304B. As such, the incorporation of the nucleotide can act as a stochastic activation of the fluorescent dye. FIG. 13C schematically shows that the nucleotide 1304B no longer has a fluorescent dye bound to it. For simplicity, the template strand is not explicitly shown to currently overhang the primer strand after incorporation of the nucleotide 1304B. In some implementations, the template strand can include further templating nucleotides (not shown) so as to overhang the primer strand after incorporation of the nucleotide 1304B. For example, the illustration of this example in FIGS. 13A-13C does not portray polymerization of a single base template overhang into a blunt end.

The above example illustrates that in a method (e.g., of performing sequencing or other analysis), a blocker (e.g., the blocker 1314) on a nucleotide can prevent further incorporation.

FIG. 14 shows an example of a method 1400. The method 1400 can include more or fewer operations, and/or two or more operations can be performed in a different order, unless otherwise indicated. The method 1400 can be used with one or more other examples described elsewhere herein.

At 1402, the method 1400 includes fitting the sample within one frame to be captured by imaging equipment. For example, a sample on a substrate can be provided on-chip so that the entire substrate is encompassed by each frame. As another example, less than the entire sample can be fit inside a frame at a given time.

At 1404, the method 1400 includes imaging one frame of the sample. For example, this involves on-chip super-resolution imaging.

At 1406, the method 1400 includes localizing one or more centroids of a point spread function based on the captured frame. For example, the centroids can be localized as described with reference to FIG. 5.

At 1408, the method 1400 includes stochastic switching of active fluorophore sets. In some implementations, chemical photoswitching and/or photoswitching via nucleotide incorporation can be used.

At 1410, it can be determined whether the imaging of the method 1400 is complete or should continue. If the imaging should continue for another cycle (or loop), the method 1400 can return to 1402, where the same or a different same area can be fit within the frame. When the imagining at 1404 is performed in the subsequent cycle, one or more other fluorophores is active compared to the previous frame, due to the stochastic switching of active fluorophore sets at 1408.

The rate of activation and/or deactivation of fluorescent labels can be actively controlled. For example, this can control the number of molecules that are likely to be active in a given frame of the imaging. FIG. 15 shows an example of a method 1500. The method 1500 can include more or fewer operations, and/or two or more operations can be performed in a different order, unless otherwise indicated. The method 1500 can be used with one or more other examples described elsewhere herein.

At 1502, the method 1500 includes setting an activation rate and/or a deactivation rate of fluorescent tags. The rate can be set by altering one or more parameters. The altered parameter can involve the presence or concentration of a chemical substance and/or a physical circumstance regarding the imaging (e.g., the wavelength of the illumination light).

At 1504, the method 1500 includes stochastic switching of active fluorophore sets to inactive fluorophore sets, and/or vice versa. For example, a photoswitching technique can be applied (e.g., as shown in FIGS. 9A-9B). As another example, a nucleotide incorporation technique can be applied (e.g., as shown in FIGS. 11A-11B, FIGS. 12A-12C, or FIGS. 13A-13C).

At 1506, the method 1500 includes imaging one frame of the sample. For example, this involves on-chip super-resolution imaging.

At 1508, the method 1500 includes localizing one or more centroids of a point spread function based on one or more captured frames. For example, the centroids can be localized as described with reference to FIG. 5.

At 1510, the method 1500 includes determining a number of the localizations for one or more captured frames. In some implementations, the number of potential localizable points reduces over time. For example, bleaching of the dye(s) can cause fewer localizations to be identified. As another example, incorporation of nucleotides into a primer strand can cause fewer localizations to be identified.

At 1512, the method 1500 includes determining whether to adjust the activation rate and/or the deactivation rate of fluorescent tags set at 1502. For example, increasing the on-rate of fluorescent tags can compensate for a decrease in localizations that may have been detected at 1510.

If the decision at 1512 is to adjust the rate (that is, "Y"), the method 1500 can proceed to 1502 and set the activation rate and/or the deactivation rate of fluorescent tags. For example, illumination with light of a particular wavelength or wavelength band (e.g., about 400-410 nm, such as about 405 nm) can increase the activation rate of the fluorophores in case of photochemical control. As another example, flowing in an incorporation buffer with a relatively higher concentration of a certain chemical substance, including, but not limited to, polymerase, nucleotide, or cofactor, can increase the activation rate.

If the decision at 1512 is to not adjust the rate (that is, "N"), the method 1500 can proceed to 1504 for further stochastic switching without actively adjusting the activation rate and/or the deactivation rate of fluorescent tags set at 1502.

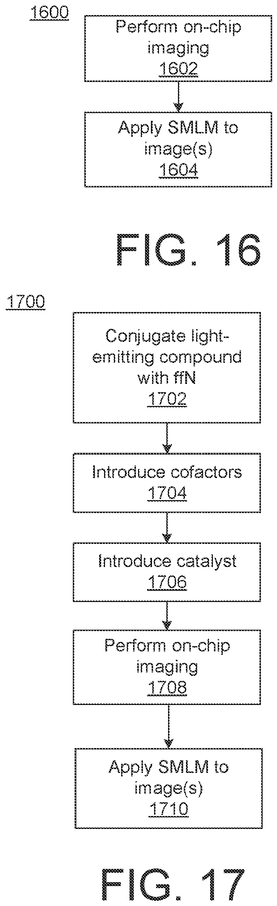

FIG. 16 shows an example of a method 1600. The method 1600 can include more or fewer operations, and/or two or more operations can be performed in a different order, unless otherwise indicated. The method 1600 can be used with one or more other examples described elsewhere herein.

At 1602, the method 1600 includes performing on-chip imaging. For example, the analysis substrate 200 in FIGS. 2A-2B can be used for on-chip imaging.

At 1604, the method 1600 includes applying SMLM to at least one image of the on-chip imaging. For example, the imaging circuitry 600 in FIG. 6 can be used for centroid identification as illustrated in FIG. 5.

The method 1600 can include analyzing the sample (e.g., by identifying one or more of the centroids 500A, 502A, or 504A) based on the propagation of fluorescence from the fluorescent dye.

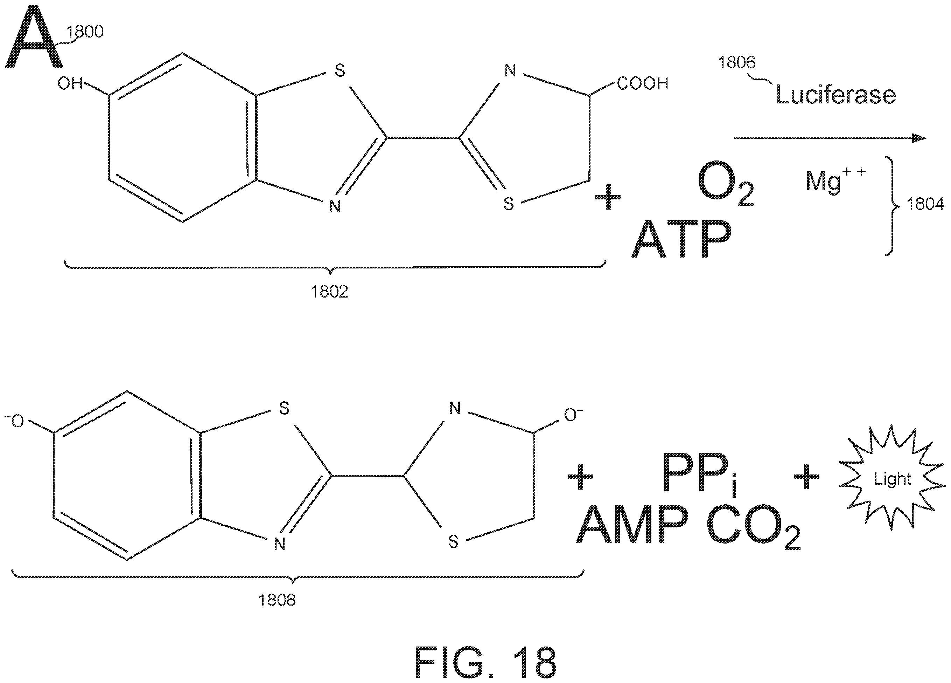

Some examples herein use an illumination light source to illuminate fluorescent dyes at a sample material and thereby trigger propagation of fluorescence that can be captured by way of on-chip imaging. In some implementations, on the other hand, an illumination light source may not be necessary to trigger the propagation of fluorescence. FIG. 17 shows an example of a method 1700. The method 1700 can include more or fewer operations, and/or two or more operations can be performed in a different order, unless otherwise indicated. The method 1700 can be used with one or more other examples described elsewhere herein. The method 1700 can involve triggering the propagation of fluorescence by chemiluminescence. FIG. 18 shows an example of catalyzing a light-emitting compound.

At 1702, the method 1700 includes conjugating a light-emitting compound with a ffN. In FIG. 18, a ffN 1800 can be conjugated with a light-emitting compound 1802. For example, the ffN 1800 can include a nucleotide (e.g., adenine) and the light-emitting compound 1802 can include a consumable substrate (e.g., D-luciferin, or a luciferin derivative). Luciferins and luciferin derivatives are examples of chemiluminogenic molecules that can emit photons responsive to interactions with a luciferase (see below) in the presence of an oxygen-containing reagent molecule. Luciferins can include colenterazine (also referred to as Renilla luciferin), colenterazine derivatives, firefly luciferin, Latia luciferin, bacterial luciferin, dinoflagellate luciferin, or vargulin.

At 1704, one or more cofactors can be introduced. In some implementations, the cofactors facilitate oxidation of the light-emitting compound 1802. For example, a cofactor 1804 can include one or more of oxygen (e.g., molecular oxygen), an energy source (e.g., adenosine triphosphate (ATP)), or magnesium (e.g., Mg$^{++}$ ions).

At 1706, a catalyst can be introduced. In some implementations, the catalyst triggers chemiluminescence of the light-emitting compound without using an illumination light source. For example, a catalyst 1806 can include an oxidative enzyme, including, but not limited to, luciferase. The term luciferase can refer to any of a class of oxidative enzymes that catalytically facilitate chemiluminescence. Luciferase can include one or more of firefly luciferase from the species Photinus pyralis or another firefly species, bacterial luciferase monooxygenase, Renilla-luciferin 2-monooxygenase, dinoflagellate luciferase, lumazine protein such as in Vibrio fischeri, haweyi, and harveyi, Metridia luciferase derived from Metridia longa, or Vargula luciferase. The catalyst can trigger a chemical reaction that at least in part results in emission of bioluminescence.

At 1708, on-chip imaging can be performed.

At 1710, SMLS can be applied to the image(s).

In some implementations, the light-emitting compound 1802 (e.g., D-luciferin) can chemically interact with the energy source (e.g., ATP) to form an intermediate compound (e.g., D-luciferyl adenylate) and one or more ions (e.g., pyrophosphate (PPi)). The intermediate compound can chemically react with a cofactor (e.g., oxidize) to form a luminescence product 1808 (e.g., oxyluciferin), and a nucleotide (e.g., adenosine monophosphate (AMP)). The luminescence product initially assumes an excited state; as the luminescence product relaxes (i.e., goes through relaxation) electromagnetic energy (photons) are emitted (e.g., as radiation in the visible spectrum). As another example, carbon dioxide (CO$_2$) can be generated (e.g., by the D-luciferyl adenylate).

The above examples illustrate use of chemiluminescence to form fluorescence. In some implementations, this can allow sample analysis to be performed without subjecting the sample to illumination light, which may affect the imaging. For example, use of chemiluminescence can allow the distance between a sample substrate (e.g., a localization layer) and a sensor layer (e.g., a chip with sensor pixels) to be tunable without strict constraints on filtering materials (e.g., to allow a filter free implementation).

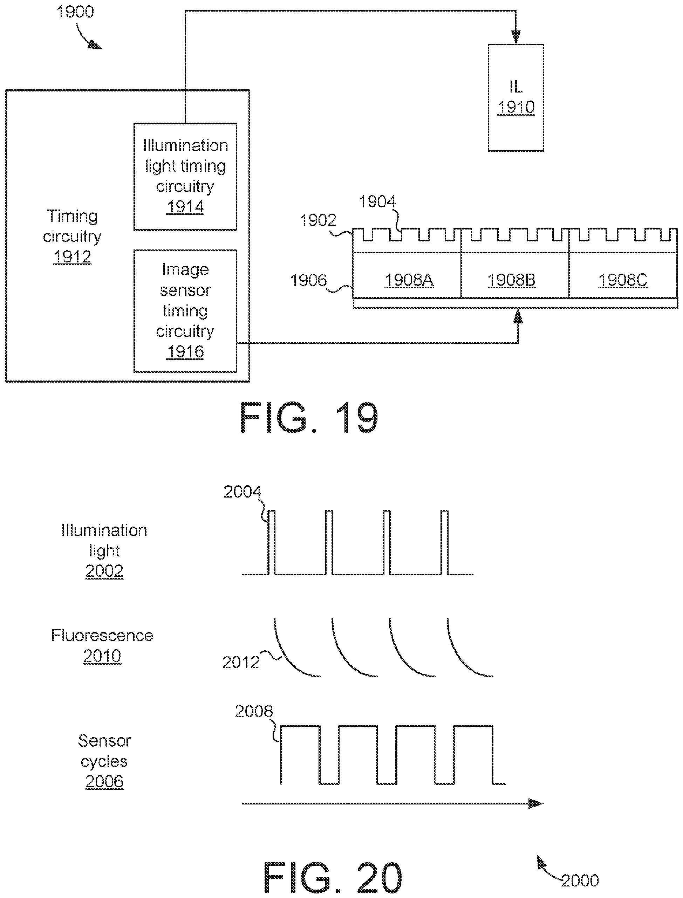

Other approaches of forming fluorescence independently of illumination light can be used. FIG. 19 shows an example of a system 1900. The system 1900 can be used with one or more other examples described elsewhere herein. The system 1900 includes an analysis substrate that comprises a localization layer 1902 having cavities 1904. The analysis substrate comprises a sensor layer 1906 that includes multiple sensor pixels 1908A-1908C. Any number of sensor pixels can be used. The system 1900 does not include a spacer between the localization layer 1902 and the sensor layer 1906. For example, there is no filter between the localization layer 1902 and the sensor layer 1906. As another example, there is no waveguide between the localization layer 1902 and the sensor layer 1906.

The system 1900 includes an illumination light (IL) source 1910. In some implementations, the illumination light source 1910 is directed toward the localization layer 1902. For example, the illumination light source 1910 can include one or more lasers.

The system 1900 includes timing circuitry 1912. The timing circuitry 1912 can be implemented using one or more examples described with reference to FIG. 22. The timing circuitry 1912 includes illumination light timing circuitry 1914 and image sensor timing circuitry 1916. The illumination light timing circuitry 1914 can generate discrete light pulses using the illumination light source 1910. FIG. 20 shows an example of pulse graphs 2000. For example, illumination light 2002 can include discrete light pulses 2004. The image sensor timing circuitry 1916 can time-gate an array of sensor pixels (e.g., the sensor pixels 1908A-1908C) based on the discrete light pulses of the illumination light. Sensor cycles 2006 includes image capture phases 2008 that are based on the discrete light pulses 2004. In some implementations, a laser pulse may excite fluorophores (which may have a fluorescence lifetime on the scale of a few nanoseconds. For example, fluorescence 2010 can include relaxation times 2012 during which bioluminescence is emitted. As a result, emission of photons can happen shortly (e.g., a few nanoseconds) after the laser pulse is over, during the relaxation time 2012 of the fluorophores. This can provide temporal filtering of the excitation fluorescence without use of physical filters. For example, the signal can be accumulated over multiple cycles of the discrete light pulses 2004 and the image capture phases 2008.

FIG. 21 is a schematic view of an example system 2100, such as those described herein, that can be used for biological and/or chemical analysis. Systems and/or techniques described herein, including, but not limited to, the imaging circuitry 600 (FIG. 6), the method 1400 (FIG. 14), and/or the method 1500 (FIG. 15), can be part of the system 2100 in some implementations. The system 2100 can operate to obtain any information or data that relates to at least one biological and/or chemical substance. In some implementations, a carrier 2102 supplies material to be analyzed. For example, the carrier 2102 can include a cartridge or any other component holding the material. In some implementations, the system 2100 has a receptacle 2104 to receive the carrier 2102 at least during the analysis. The receptacle 2104 can form an opening in a housing 2106 of the system 2100. For example, some or all components of the system 2100 can be within the housing 2106.

The system 2100 can include an optical system 2108 for biological and/or chemical analysis of the material(s) of the carrier 2102. The optical system 2108 can perform one or more optical operations, including, but not limited to, illumination and/or imaging of the material(s). For example, the optical system 2108 can include any or all systems described elsewhere herein. As another example, the optical system 2108 can perform any or all operations described elsewhere herein.

The system 2100 can include a thermal system 2110 for providing thermal treatment relating to biological and/or chemical analysis. In some implementations, the thermal system 2110 thermally conditions at least part of the material(s) to be analyzed and/or the carrier 2102.

The system 2100 can include a fluid system 2112 for managing one or more fluids relating to biological and/or chemical analysis. In some implementations, the fluid(s) can be provided for the carrier 2102 or its material(s). For example, fluid can be added to and/or removed from the material of the carrier 2102.

The system 2100 includes a user interface 2114 that facilitates input and/or output relating to biological and/or chemical analysis. The user interface can be used to specify one or more parameters for the operation of the system 2100 and/or to output results of biological and/or chemical analysis, to name just a few examples. For example, the user interface 2114 can include one or more display screens (e.g., a touchscreen), a keyboard, and/or a pointing device (e.g., a mouse or a trackpad).

The system 2100 can include a system controller 2116 that can control one or more aspects of the system 2100 for performing biological and/or chemical analysis. The system controller 2116 can control the receptacle 2104, the optical system 2108, the thermal system 2110, the fluid system 2112, and/or the user interface 2114. The system controller 2116 can include at least one processor and at least one storage medium (e.g., a memory) with executable instructions for the processor.

FIG. 22 illustrates an example architecture of a computing device 2200 that can be used to implement aspects of the present disclosure, including any of the systems, apparatuses, and/or techniques described herein, or any other systems, apparatuses, and/or techniques that may be utilized in the various possible implementations.

The computing device illustrated in FIG. 22 can be used to execute the operating system, application programs, and/or software modules (including the software engines) described herein.

The computing device 2200 includes, in some implementations, at least one processing device 2202 (e.g., a processor), such as a central processing unit (CPU). A variety of processing devices are available from a variety of manufacturers, for example, Intel or Advanced Micro Devices. In this example, the computing device 2200 also includes a system memory 2204, and a system bus 2206 that couples various system components including the system memory 2204 to the processing device 2202. The system bus 2206 is one of any number of types of bus structures that can be used, including, but not limited to, a memory bus, or memory controller; a peripheral bus; and a local bus using any of a variety of bus architectures.

Examples of computing devices that can be implemented using the computing device 2200 include a desktop computer, a laptop computer, a tablet computer, a mobile computing device (such as a smart phone, a touchpad mobile digital device, or other mobile devices), or other devices configured to process digital instructions.

The system memory 2204 includes read only memory 2208 and random access memory 2210. A basic input/output system 2212 containing the basic routines that act to transfer information within computing device 2200, such as during start up, can be stored in the read only memory 2208.

The computing device 2200 also includes a secondary storage device 2214 in some implementations, such as a hard disk drive, for storing digital data. The secondary storage device 2214 is connected to the system bus 2206 by a secondary storage interface 2216. The secondary storage device 2214 and its associated computer readable media provide nonvolatile and non-transitory storage of computer readable instructions (including application programs and program modules), data structures, and other data for the computing device 2200.

Although the example environment described herein employs a hard disk drive as a secondary storage device, other types of computer readable storage media are used in other implementations. Examples of these other types of computer readable storage media include magnetic cassettes, flash memory cards, digital video disks, Bernoulli cartridges, compact disc read only memories, digital versatile disk read only memories, random access memories, or read only memories. Some implementations include non-transitory media. For example, a computer program product can be tangibly embodied in a non-transitory storage medium. Additionally, such computer readable storage media can include local storage or cloud-based storage.

A number of program modules can be stored in secondary storage device 2214 and/or system memory 2204, including an operating system 2218, one or more application programs 2220, other program modules 2222 (such as the software engines described herein), and program data 2224. The computing device 2200 can utilize any suitable operating system, such as Microsoft Windows™, Google Chrome™ OS, Apple OS, Unix, or Linux and variants and any other operating system suitable for a computing device. Other examples can include Microsoft, Google, or Apple operating systems, or any other suitable operating system used in tablet computing devices.

In some implementations, a user provides inputs to the computing device 2200 through one or more input devices 2226. Examples of input devices 2226 include a keyboard 2228, mouse 2230, microphone 2232 (e.g., for voice and/or other audio input), touch sensor 2234 (such as a touchpad or touch sensitive display), and gesture sensor 2235 (e.g., for gestural input. In some implementations, the input device(s) 2226 provide detection based on presence, proximity, and/or motion. In some implementations, a user may walk into their home, and this may trigger an input into a processing device. For example, the input device(s) 2226 may then facilitate an automated experience for the user. Other implementations include other input devices 2226. The input devices can be connected to the processing device 2202 through an input/output interface 2236 that is coupled to the system bus 2206. These input devices 2226 can be connected by any number of input/output interfaces, such as a parallel port, serial port, game port, or a universal serial bus. Wireless communication between input devices 2226 and the input/output interface 2236 is possible as well, and includes infrared, BLUETOOTH® wireless technology, 802.11a/b/g/n, cellular, ultra-wideband (UWB), ZigBee, or other radio frequency communication systems in some possible implementations, to name just a few examples.

In this example implementation, a display device 2238, such as a monitor, liquid crystal display device, projector, or touch sensitive display device, is also connected to the system bus 2206 via an interface, such as a video adapter 2240. In addition to the display device 2238, the computing device 2200 can include various other peripheral devices (not shown), such as speakers or a printer.

The computing device 2200 can be connected to one or more networks through a network interface 2242. The network interface 2242 can provide for wired and/or wireless communication. In some implementations, the network interface 2242 can include one or more antennas for transmitting and/or receiving wireless signals. When used in a local area networking environment or a wide area networking environment (such as the Internet), the network interface 2242 can include an Ethernet interface. Other possible implementations use other communication devices. For example, some implementations of the computing device 2200 include a modem for communicating across the network.

The computing device 2200 can include at least some form of computer readable media. Computer readable media includes any available media that can be accessed by the computing device 2200. By way of example, computer readable media include computer readable storage media and computer readable communication media.

Computer readable storage media includes volatile and nonvolatile, removable and non-removable media implemented in any device configured to store information such as computer readable instructions, data structures, program modules or other data. Computer readable storage media includes, but is not limited to, random access memory, read only memory, electrically erasable programmable read only memory, flash memory or other memory technology, compact disc read only memory, digital versatile disks or other optical storage, magnetic cassettes, magnetic tape, magnetic disk storage or other magnetic storage devices, or any other medium that can be used to store the desired information and that can be accessed by the computing device 2200.

Computer readable communication media typically embodies computer readable instructions, data structures, program modules or other data in a modulated data signal such as a carrier wave or other transport mechanism and includes any information delivery media. The term "modulated data signal" refers to a signal that has one or more of its characteristics set or changed in such a manner as to encode information in the signal. By way of example, computer readable communication media includes wired media such as a wired network or direct-wired connection, and wireless media such as acoustic, radio frequency, infrared, and other wireless media. Combinations of any of the above are also included within the scope of computer readable media.

The computing device illustrated in FIG. 22 is also an example of programmable electronics, which may include one or more such computing devices, and when multiple computing devices are included, such computing devices can be coupled together with a suitable data communication network so as to collectively perform the various functions, methods, or operations disclosed herein.

The terms "substantially" and "about" used throughout this Specification are used to describe and account for small fluctuations, such as due to variations in processing. For example, they can refer to less than or equal to ±5%, such as less than or equal to ±2%, such as less than or equal to ±1%, such as less than or equal to ±0.5%, such as less than or equal to ±0.2%, such as less than or equal to ±0.1%, such as less than or equal to ±0.05%. Also, when used herein, an indefinite article such as "a" or "an" means "at least one."

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

A number of implementations have been described. In addition, the logic flows depicted in the figures do not require the particular order shown, or sequential order, to achieve desirable results. In addition, other processes may be provided, or processes may be eliminated, from the described flows, and other components may be added to, or removed from, the described systems. While certain features of the described implementations have been illustrated as described herein, many modifications, substitutions, changes and equivalents will now occur to those skilled in the art. Any portion of the apparatus and/or methods described herein may be combined in any combination, except mutually exclusive combinations. The implementations described herein can include various combinations and/or sub-combinations of the functions, components and/or features of the different implementations described. The invention is only limited by the appended claims.

**Claims**

1. An imaging system comprising:

   an analysis substrate (200) comprising:

      a localization layer (202) to be provided with a sample comprising a nucleotide provided with a fluorescent dye; and
      a sensor layer (206), the localization layer (202) being on-chip relative to the sensor layer (206); and

   imaging circuitry to image the sample, the imaging circuitry comprising:

      an array of sensor pixels (208A-E) at the sensor layer (206), one or more of the array of sensor pixels (208A-E) to receive a propagation of fluorescence from the fluorescent dye; and **characterised by**
      fitting circuitry to identify, using a signal of the sensor layer (206), a pixel intensity distribution (300) due to a point spread function, and determine a centroid of the pixel intensity distribution by fitting a function to the pixel intensity distribution (300).

2. The imaging system of claim 1, wherein the analysis substrate (200) is part of a flowcell.

3. The imaging system of any of claims 1 or 2, wherein the localization layer (202) comprises nanowells.

4. The imaging system of any of claims 1 or 2, wherein the localization layer (202) comprises a zero-mode waveguide.

5. The imaging system of any of claims 1 to 4, wherein the localization layer (202) comprises a surface passivation layer.

6. The imaging system of any of claims 1 to 6, wherein the analysis substrate (200) further comprises a spacer layer (210) between the localization layer (202) and the sensor layer (206), the spacer layer (210) having a thickness based on the propagation of fluorescence from the fluorescent dye.

7. The imaging system of claim 6, wherein the thickness of the spacer layer (210) corresponds to the propagation of fluorescence from the fluorescent dye being received by a predefined proportion of the array of sensor pixels (208A-E).

8. The imaging system of either of claims 6 or 7, wherein the thickness of the spacer layer (210) is selected based on a predefined full width at half maximum of the propagation of fluorescence from the fluorescent dye.

9. The imaging system of any of claims 1 to 8, wherein the imaging circuitry further comprises restriction circuitry restricting the fitting circuitry to fit the function to the pixel intensity distribution (300) only in at least one area indicated by a well distribution pattern.

10. The imaging system of claim 9, wherein the imaging circuitry further comprises rejection circuitry to reject at least one localization outside the area indicated by the well distribution pattern.

11. The imaging system of any of claims 1 to 10, wherein the sensor layer (206) provides a single field of view of the localization layer.

12. The imaging system of any of claims 1 to 11, further comprising a filter layer (212A-C) between the localization layer (202) and the sensor layer (206), the filter layer (212A-C)including at least one color filter.

**13.** The imaging system of any of claims 1 to 12, wherein the analysis substrate (200) does not have a filter between the localization layer (202) and the sensor layer (206), and wherein the analysis substrate (200) does not have a waveguide between the localization layer (202) and the sensor layer (206).

**14.** The imaging system of any of claims 1 to 13, further comprising:

an illumination light source;
illumination light timing circuitry to generate discrete light pulses using the illumination light source; and
image sensor timing circuitry to time-gate the array of sensor pixels based on the discrete light pulses of the illumination light.

**15.** A method comprising:

performing on-chip imaging of a sample at an analysis substrate (200); and
applying single-molecule localization microscopy, SMLM, to at least one image of the on-chip imaging wherein:

performing the on-chip imaging comprises:

applying the sample to a localization layer (202) of the analysis substrate (200), the sample comprising a nucleotide provided with a fluorescent dye;
receiving a propagation of fluorescence from the fluorescent dye using at least one sensor pixel (208A-E) at a sensor layer (206) of the analysis substrate (200), the sensor layer (206) comprising an array of sensor pixels (208A-E); and

performing the SMLM comprises:

analyzing the sample based on the propagation of fluorescence from the fluorescent dye and **characterised by** identifying, using a signal of the sensor layer (206), a pixel intensity distribution (300) due to a point spread function, and determine a centroid of the pixel intensity distribution by fitting a function to the pixel intensity distribution (300).

**Patentansprüche**

**1.** Ein Bildgebungssystem, das Folgendes beinhaltet:

ein Analysesubstrat (200), das Folgendes beinhaltet:

eine Lokalisierungsschicht (202), der eine Probe bereitgestellt werden soll, die ein Nukleotid beinhaltet, das mit einem Fluoreszenzfarbstoff bereitgestellt ist; und
eine Sensorschicht (206), wobei die Lokalisierungsschicht (202) relativ zu der Sensorschicht (206) chipintegriert ist; und

Bildgebungsschaltung, um die Probe abzubilden, wobei die Bildgebungsschaltung Folgendes beinhaltet:
eine Anordnung von Sensorpixeln (208A-E) an der Sensorschicht (206), wobei eine oder mehrere der Anordnung von Sensorpixeln (208A-E) eine Ausbreitung von Fluoreszenz von dem Fluoreszenzfarbstoff empfangen sollen; und **gekennzeichnet durch** Folgendes:
Anpassungsschaltung, um, unter Verwendung eines Signals der Sensorschicht (206), eine Pixelintensitätsverteilung (300) aufgrund einer Punktverbreitungsfunktion zu identifizieren, und durch das Anpassen einer Funktion an die Pixelintensitätsverteilung (300) einen Schwerpunkt der Pixelintensitätsverteilung zu bestimmen.

**2.** Bildgebungssystem gemäß Anspruch 1, wobei das Analysesubstrat (200) Teil einer Durchflusszelle ist.

**3.** Bildgebungssystem gemäß einem der Ansprüche 1 oder 2, wobei die Lokalisierungsschicht (202) Nanowannen beinhaltet.

**4.** Bildgebungssystem gemäß einem der Ansprüche 1 oder 2, wobei die Lokalisierungsschicht (202) einen Nullmodus-Wellenleiter beinhaltet.

**5.** Bildgebungssystem gemäß einem der Ansprüche 1 bis 4, wobei die Lokalisierungsschicht (202) eine Oberflächenpassivierungsschicht beinhaltet.

**6.** Bildgebungssystem gemäß einem der Ansprüche 1 bis 6, wobei das Analysesubstrat (200) ferner eine Abstandhalterschicht (210) zwischen der Lokalisierungsschicht (202) und der Sensorschicht (206) beinhaltet, wobei die Abstandhalterschicht (210) eine Dicke aufweist, die auf der Ausbreitung der Fluoreszenz von dem Fluoreszenzfarbstoff basiert.

**7.** Bildgebungssystem gemäß Anspruch 6, wobei die Dicke der Abstandhalterschicht (210) der Ausbreitung der Fluoreszenz von dem Fluoreszenzfarbstoff, die durch einen vordefinierten Anteil der Anordnung von Sensorpixeln (208A-E) empfangen wird, entspricht.

8. Bildgebungssystem gemäß Anspruch 6 oder 7, wobei die Dicke der Abstandhalterschicht (210) basierend auf einer vordefinierten vollen Breite bei halbem Maximum der Ausbreitung der Fluoreszenz von dem Fluoreszenzfarbstoff ausgewählt ist.

9. Bildgebungssystem gemäß einem der Ansprüche 1 bis 8, wobei die Bildgebungsschaltung ferner eine Einschränkungsschaltung beinhaltet, die die Anpassungsschaltung einschränkt, um die Funktion nur in dem mindestens einen Bereich, der durch ein Wannenverteilungsmuster angezeigt wird, an die Pixelintensitätsverteilung (300) anzupassen.

10. Bildgebungssystem gemäß Anspruch 9, wobei die Bildgebungsschaltung ferner eine Zurückweisungsschaltung beinhaltet, um mindestens eine Lokalisierung außerhalb des Bereichs, der durch das Wannenverteilungsmuster angezeigt wird, zurückzuweisen.

11. Bildgebungssystem gemäß einem der Ansprüche 1 bis 10, wobei die Sensorschicht (206) ein einzelnes Sichtfeld der Lokalisierungsschicht bereitstellt.

12. Bildgebungssystem gemäß einem der Ansprüche 1 bis 11, das ferner eine Filterschicht (212A-C) zwischen der Lokalisierungsschicht (202) und der Sensorschicht (206) beinhaltet, wobei die Filterschicht (212A-C) mindestens einen Farbfilter umfasst.

13. Bildgebungssystem gemäß einem der Ansprüche 1 bis 12, wobei das Analysesubstrat (200) zwischen der Lokalisierungsschicht (202) und der Sensorschicht (206) keinen Filter aufweist, und wobei das Analysesubstrat (200) zwischen der Lokalisierungsschicht (202) und der Sensorschicht (206) keinen Wellenleiter aufweist.

14. Bildgebungssystem gemäß einem der Ansprüche 1 bis 13, das ferner Folgendes beinhaltet:

eine Beleuchtungslichtquelle;
eine Zeitgeberschaltung für ein Beleuchtungslicht, um unter Verwendung der Beleuchtungslichtquelle diskrete Lichtimpulse zu erzeugen; und
eine Zeitgeberschaltung für einen Bildsensor, um die Anordnung von Sensorpixeln basierend auf den diskreten Lichtimpulsen des Beleuchtungslichts zeitzutakten.

15. Ein Verfahren, das Folgendes beinhaltet:

Durchführen von chipintegrierter Bildgebung einer Probe an einem Analysesubstrat (200); und
Anwenden einer Einzelmoleküllokalisierungsmikroskopie, SMLM, auf mindestens ein Bild der chipintegrierten Bildgebung, wobei:

das Durchführen der chipintegrierten Bildgebung Folgendes beinhaltet:

Aufbringen der Probe auf eine Lokalisierungsschicht (202) des Analysesubstrats (200), wobei die Probe ein Nukleotid beinhaltet, das mit einem Fluoreszenzfarbstoff bereitgestellt wird;
Empfangen einer Ausbreitung von Fluoreszenz von dem Fluoreszenzfarbstoff unter Verwendung mindestens eines Sensorpixels (208A-E) an einer Sensorschicht (206) des Analysesubstrats (200), wobei die Sensorschicht (206)
eine Anordnung von Sensorpixeln (208A-E) beinhaltet; und

das Durchführen der SMLM Folgendes beinhaltet:
Analysieren der Probe basierend auf der Ausbreitung der Fluoreszenz von dem Fluoreszenzfarbstoff und **gekennzeichnet durch** Folgendes:

Identifizieren, unter Verwendung eines Signals der Sensorschicht (206), einer Pixelintensitätsverteilung (300) aufgrund einer Punktverbreitungsfunktion, und
Bestimmen eines Schwerpunkts der Pixelintensitätsverteilung durch das Anpassen einer Funktion an die Pixelintensitätsverteilung (300).

**Revendications**

1. Un système d'imagerie comprenant :

un substrat d'analyse (200) comprenant :

une couche de localisation (202) à pourvoir d'un échantillon comprenant un nucléotide pourvu d'une coloration fluorescente ; et
une couche formant capteur (206), la couche de localisation (202) étant sur puce relativement à la couche formant capteur (206) ; et

une circuiterie d'imagerie pour imager l'échantillon, la circuiterie d'imagerie comprenant :

une matrice de pixels capteurs (208A-E) au niveau de la couche formant capteur (206), un ou plusieurs pixels capteurs de la matrice de pixels capteurs (208A-E) devant recevoir une propagation de fluorescence à partir de la coloration fluorescente ; et **caractérisé par**

une circuiterie d'adaptation pour identifier, à l'aide d'un signal de la couche formant capteur (206), une distribution d'intensité de pixels (300) en raison d'une fonction d'étalement ponctuel, et déterminer une centroïde de la distribution d'intensité de pixels par adaptation d'une fonction à la distribution d'intensité de pixels (300).

2. Le système d'imagerie de la revendication 1, où le substrat d'analyse (200) fait partie d'une cellule d'écoulement (*flowcell*).

3. Le système d'imagerie de n'importe lesquelles des revendications 1 ou 2, où la couche de localisation (202) comprend des nanopuits.

4. Le système d'imagerie de n'importe lesquelles des revendications 1 ou 2, où la couche de localisation (202) comprend un guide d'ondes en mode zéro.

5. Le système d'imagerie de n'importe lesquelles des revendications 1 à 4, où la couche de localisation (202) comprend une couche de passivation de surface.

6. Le système d'imagerie de n'importe lesquelles des revendications 1 à 6, où le substrat d'analyse (200) comprend en outre une couche d'espacement (210) entre la couche de localisation (202) et la couche formant capteur (206), la couche d'espacement (210) ayant une épaisseur basée sur la propagation de fluorescence à partir de la coloration fluorescente.

7. Le système d'imagerie de la revendication 6, où l'épaisseur de la couche d'espacement (210) correspond à la propagation de fluorescence à partir de la coloration fluorescente qui est reçue par une proportion prédéfinie de la matrice de pixels capteurs (208A-E).

8. Le système d'imagerie de soit la revendication 6, soit la revendication 7, où l'épaisseur de la couche d'espacement (210) est sélectionnée sur la base d'une largeur totale à mihauteur prédéfinie de la propagation de fluorescence à partir de la coloration fluorescente.

9. Le système d'imagerie de n'importe lesquelles des revendications 1 à 8, où la circuiterie d'imagerie comprend en outre une circuiterie de restriction restreignant la circuiterie d'adaptation afin de n'adapter la fonction à la distribution d'intensité de pixels (300) que dans au moins une zone indiquée par un modèle de distribution des puits.

10. Le système d'imagerie de la revendication 9, où la circuiterie d'imagerie comprend en outre une circuiterie de rejet pour rejeter au moins une localisation en dehors de la zone indiquée par le modèle de distribution des puits.

11. Le système d'imagerie de n'importe lesquelles des revendications 1 à 10, où la couche formant capteur (206) apporte un champ de vision unique de la couche de localisation.

12. Le système d'imagerie de n'importe lesquelles des revendications 1 à 11, comprenant en outre une couche filtrante (212A-C) entre la couche de localisation (202) et la couche formant capteur (206), la couche filtrante (212A-C) incluant au moins un filtre coloré.

13. Le système d'imagerie de n'importe lesquelles des revendications 1 à 12, où le substrat d'analyse (200) n'a pas de filtre entre la couche de localisation (202) et la couche formant capteur (206), et où le substrat d'analyse (200) n'a pas de guide d'ondes entre la couche de localisation (202) et la couche formant capteur (206).

14. Le système d'imagerie de n'importe lesquelles des revendications 1 à 13, comprenant en outre :

une source de lumière d'éclairage ; une circuiterie de base de temps de lumière d'éclairage pour générer des impulsions de lumière discrètes à l'aide de la source de lumière d'éclairage ; et une circuiterie de base de temps de capteur d'images pour effectuer une sélection temporelle sur la matrice de pixels capteurs sur la base des impulsions de lumière discrètes de la lumière d'éclairage.

15. Un procédé comprenant :

la réalisation d'une imagerie sur puce d'un échantillon au niveau d'un substrat d'analyse (200) ; et l'application d'une microscopie de localisation de molécules uniques, SMLM (*Single-Molecule Localization Microscopy*), à au moins une image de l'imagerie sur puce où :

la réalisation de l'imagerie sur puce comprend :

l'application de l'échantillon sur une couche de localisation (202) du substrat d'analyse (200), l'échantillon comprenant un nucléotide pourvu d'une coloration fluorescente ;

la réception d'une propagation de fluorescence à partir de la coloration fluorescente à l'aide d'au moins un pixel capteur (208A-E) au niveau d'une couche formant capteur (206) du substrat d'analyse (200), la couche formant capteur (206) comprenant une matrice de pixels capteurs (208A-E) ; et

la réalisation de la SMLM comprend :

l'analyse de l'échantillon sur la base de la propagation de fluorescence à partir de la coloration fluorescente et **caractérisée par**

l'identification, à l'aide d'un signal de la couche formant capteur (206), d'une distribution d'intensité de pixels (300) en raison d'une fonction d'étalement ponctuel, et la détermination d'une centroïde de la distribution d'intensité de pixels par adaptation d'une fonction à la distribution d'intensité de pixels (300).

FIG. 1

FIG. 2A

FIG. 2B

FIG. 3

FIG. 4

FIG. 5

**FIG. 6**

FIG. 7A

FIG. 7B

FIG. 8A

FIG. 8B

FIG. 9A

FIG. 9B

FIG. 10A

FIG. 10B

FIG. 11A

FIG. 11B

FIG. 12A

FIG. 12B

FIG. 12C

FIG. 13A

FIG. 13B

FIG. 13C

FIG. 14

FIG. 15

1600

Perform on-chip
imaging
1602

Apply SMLM to
image(s)
1604

# FIG. 16

1700

Conjugate light-
emitting compound
with ffN
1702

Introduce cofactors
1704

Introduce catalyst
1706

Perform on-chip
imaging
1708

Apply SMLM to
image(s)
1710

# FIG. 17

FIG. 18

EP 3 930 904 B1

1900

Timing circuitry 1912

Illumination light timing circuitry 1914

Image sensor timing circuitry 1916

IL 1910

1902  1904

1906  1908A  1908B  1908C

# FIG. 19

Illumination light 2002

2004

Fluorescence 2010

2012

Sensor cycles 2006

2008

# FIG. 20

2000

FIG. 21

COMPUTING DEVICE  2200

PROCESSING
DEVICE
2202

VIDEO ADAPTER
2240

DISPLAY
DEVICE
2238

SECONDARY
STORAGE
DEVICE
2214

INTERFACE
2216

NETWORK
INTERFACE
2242

TO
NETWORK

2206

MEMORY 2204

| ROM 2208 | RAM 2210 | BIOS 2212 |
| --- | --- | --- |
| OPERATING SYSTEM 2218 | PROGRAM MODULES 2222 | |
| APPLICATION PROGRAMS 2220 | PROGRAM DATA 2224 | |

I/O INTERFACE
2236

2226

KEYBOARD
2228

MOUSE
2230

MICROPHONE
2232

TOUCH
SENSOR
2234

GESTURE
SENSOR
2235

FIG. 22

**EP 3 930 904 B1**

**Patent documents cited in the description**

- US 62950065
- US 2010009456 A
- US 2018251829 A
- US 2019088463 A
- US 2018239087 A
- US 9150896 B